(19) Europäisches Patentamt
European Patent Office
Office européen des brevets

(11) **EP 2 543 961 B1**

(12) **EUROPEAN PATENT SPECIFICATION**

(45) Date of publication and mention of the grant of the patent:
**24.12.2014 Bulletin 2014/52**

(51) Int Cl.:
***G01C 17/38*** *(2006.01)*    ***G01P 15/18*** *(2013.01)*
***G01P 21/00*** *(2006.01)*    ***G01C 25/00*** *(2006.01)*

(21) Application number: **12187416.8**

(22) Date of filing: **23.05.2008**

(54) **Physical amount measuring device and physical amount measuring method**

Vorrichtung zur Messung der physikalischen Größe und Verfahren zur Messung der physikalischen Größe

Dispositif de mesure de quantité physique et procédé de mesure de quantité physique

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **24.05.2007 JP 2007137927**

(43) Date of publication of application:
**09.01.2013 Bulletin 2013/02**

(62) Document number(s) of the earlier application(s) in accordance with Art. 76 EPC:
**08764634.5 / 2 157 405**

(73) Proprietor: **Asahi Kasei EMD Corporation**
**Chiyoda-ku**
**Tokyo 101-8101 (JP)**

(72) Inventors:
• **Yamashita, Masaya**
**Tokyo 101-8101 (JP)**
• **Kitamura, Toru**
**Tokyo 101-8101 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 788 396**    **EP-A2- 1 821 067**
**US-A- 4 807 462**    **US-A- 5 297 063**
**US-A1- 2004 123 475**    **US-A1- 2006 190 174**

**Description**

TECHNICAL FIELD

The present invention relates to a physical quantity measuring device and a physical quantity measuring method. Particularly, the invention relates to a physical quantity measuring device and a physical quantity measuring method in which an offset included in the vector physical quantity data group can be estimated from a vector physical quantity data group obtained by a sensor detecting a vector physical quantity.

BACKGROUND ART

An azimuth measuring device (so-called electronic compass) is known as a conventional device that magnetic sensors are arranged along two or three directions, geomagnetism is measured and an azimuth is calculated. In recent years, the azimuth measuring device has become increasingly smaller and is incorporated into a portable device such as a mobile telephone or a PDA (Personal Digital Assistant).

When a magnetized component such as a speaker is disposed near the magnetic sensor, the azimuth measuring device detects magnetism leaked from the magnetized component with the geomagnetism. Thus, an azimuth is calculated by mistake unless an azimuth is determined after a signal component except geomagnetism is subtracted from a measured signal. A stationary signal component except geomagnetism is referred to as an offset.

A method of estimating an offset of an azimuth measuring device that is suitable for a portable appliance is disclosed in patent document 1. The method disclosed in patent document 1 is a technique for estimating the offset of the azimuth measuring device incorporated in the portable appliance automatically and unconsciously by the user in view of the fact that the posture of a mobile device is variously changed depending on the use condition of a user.

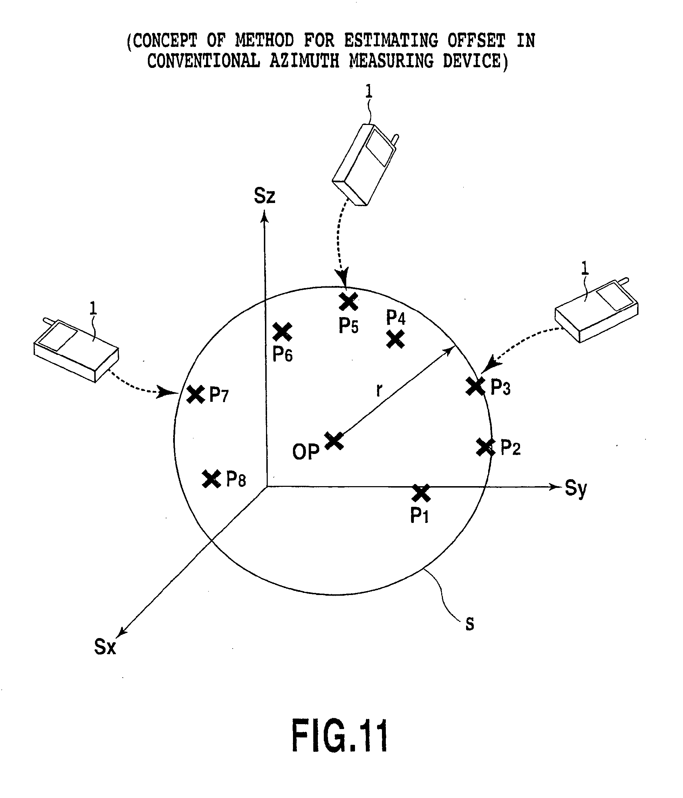

FIG. 11 is a diagram illustrating the concept of a method of estimating an offset in a conventional azimuth measuring device.

When a user freely moves an azimuth measuring device 1 under a uniform geomagnetism environment, geomagnetic data obtained by the azimuth measuring device 1 is distributed on the surface of a sphere in which an offset included in the data is located at the center position of the sphere. The sensitivities of measurement axes of the azimuth measuring device 1 are considered to be equal to each other.

In this prior art, as described above, a component except geomagnetism included in data is referred to as an offset. First, in order to estimate an offset, the center of a spherical surface (when the geomagnetism is detected by using a three-axis geomagnetic sensor) on which a geomagnetic data group is distributed is estimated. The center of the spherical surface is referred to as a reference point. Next, the reliability of the estimated reference point (whether the reference point is estimated within an estimation error which is allowed by a system) is examined, and thus the reference point is used as the offset of the system on condition that the reference point is determined to be reliable. When the reliability of the reference point is not determined, the reference point is used as the offset of the system.

According to patent document 1, when a three-axis measurement data group obtained repeatedly by the azimuth measuring device 1 is defined as $(x_i, y_i, z_i)$, it is suitable to estimate a reference point $(o_x, o_y, o_z)$ so as to minimize an evaluation formula [Formula 1]. Here, the reference point is determined by the solution of a simultaneous linear equation shown as [Formula 2]. That is,

[Formula 1]

$$S = \sum_{i=1}^{N} \left\| \left( x_i - o_x \right)^2 + \left( y_i - o_y \right)^2 + \left( z_i - o_z \right)^2 - r^2 \right\|^2$$

[Formula 2]

$$
\begin{bmatrix}
\sum\limits_{i=1}^{N} x_i(x_i - \bar{x}) & \sum\limits_{i=1}^{N} y_i(x_i - \bar{x}) & \sum\limits_{i=1}^{N} z_i(x_i - \bar{x}) \\
\sum\limits_{i=1}^{N} x_i(x_i - \bar{x}) & \sum\limits_{i=1}^{N} y_i(y_i - \bar{y}) & \sum\limits_{i=1}^{N} z_i(y_i - \bar{y}) \\
\sum\limits_{i=1}^{N} z_i(x_i - \bar{x}) & \sum\limits_{i=1}^{N} z_i(y_i - \bar{y}) & \sum\limits_{i=1}^{N} z_i(z_i - \bar{z})
\end{bmatrix}
\begin{bmatrix} o_x \\ o_y \\ o_z \end{bmatrix}
= \frac{1}{2}
\begin{bmatrix}
\sum\limits_{i=1}^{N} \left(x_i^2 + y_i^2 + z_i^2\right)(x_i - \bar{x}) \\
\sum\limits_{i=1}^{N} \left(x_i^2 + y_i^2 + z_i^2\right)(y_i - \bar{y}) \\
\sum\limits_{i=1}^{N} \left(x_i^2 + y_i^2 + z_i^2\right)(z_i - \bar{z})
\end{bmatrix}
$$

where,

[Formula 3]

$$
\bar{x} = \frac{1}{N}\sum_{i=1}^{N} x_i, \quad \bar{y} = \frac{1}{N}\sum_{i=1}^{N} y_i, \quad \bar{z} = \frac{1}{N}\sum_{i=1}^{N} z_i
$$

and, N is the number of pieces of geomagnetic data obtained.

Another method of determining an offset of a sensor is disclosed in patent document 8. According to patent document 8, among three or more points of magnetic data detected by a magnetic detection means, an intersection between a perpendicular bisector to a straight line connecting any two points and a perpendicular bisector to a straight line connecting two points except the above-described two points is determined as an offset.

Moreover, any two points are extracted from a plurality of magnetic data many times, a large number of perpendicular bisectors per straight lines connecting two points are set, and the average of coordinates of a plurality of intersections at which the large number of perpendicular bisectors intersect each other is determined as an offset.

In recent years, as a lightweight and small three-axis acceleration sensor that can be incorporated into a portable device, a piezoresistive three-axis acceleration sensor comprised of a semiconductor device employing MEMS (Micro Electro Mechanical Systems) technology has been developed (for example, see patent document 7).

Patent documents 5 and 6 disclose methods for automatically and unconsciously by the user estimating the offset of an acceleration sensor. Any of these methods is a technique based on [Formula 2] and is a technique that estimates the offset with high reliability by utilizing characteristic of acceleration.

As the azimuth measuring device of FIG. 11, gravitational acceleration measurement data detected by the three-axis acceleration sensor is distributed on the surface of a sphere in which the offset of the acceleration sensor is located at the center position of the sphere. The sensitivities of measurement axes of the acceleration sensor are considered to be equal to each other.

Since the acceleration sensor detects gravitational acceleration and motion acceleration simultaneously, the separation of the gravitational acceleration and the motion acceleration is a technical point for determining an offset with high reliability.

In patent document 5, whether a portable terminal becomes stationary is determined from acceleration measurement data that is continuous in time, and an offset is estimated by use of only the acceleration measurement data at that time.

In patent document 6, the probability that motion acceleration included in the acceleration measurement data is calculated by using variations in acceleration measurement data that is continuous in time. Thus, an offset can also be estimated from measurement data including motion acceleration.

Patent document 1: PCT/JP2003/008293
Patent document 2: PCT/JP2004/009324
Patent document 3: PCT/JP2004/018888
Patent document 4: Japanese Patent Laid-Open No. 2005-195376
Patent document 5: PCT/JP2005/014817
Patent document 6: PCT/JP2006/326015

Patent document 7: Japanese Patent Laid-Open No. 2003-101033
Patent document 8: Japanese Patent Laid-Open No. 2006-226810

Document US 2006/190174 A1, 24 August 2006, relates to an electronic compass and a direction finding method of a mobile object for calibrating directional errors caused by disturbing magnetic fields.

DISCLOSURE OF THE INVENTION

The above-described [Formula 2] is a formula for estimating an offset included in the geomagnetic data group by using a geomagnetic data group obtained in a space in which the magnitude of the geomagnetism is uniform.
However, there are few circumstances in which the magnitude of the geomagnetism is uniform.

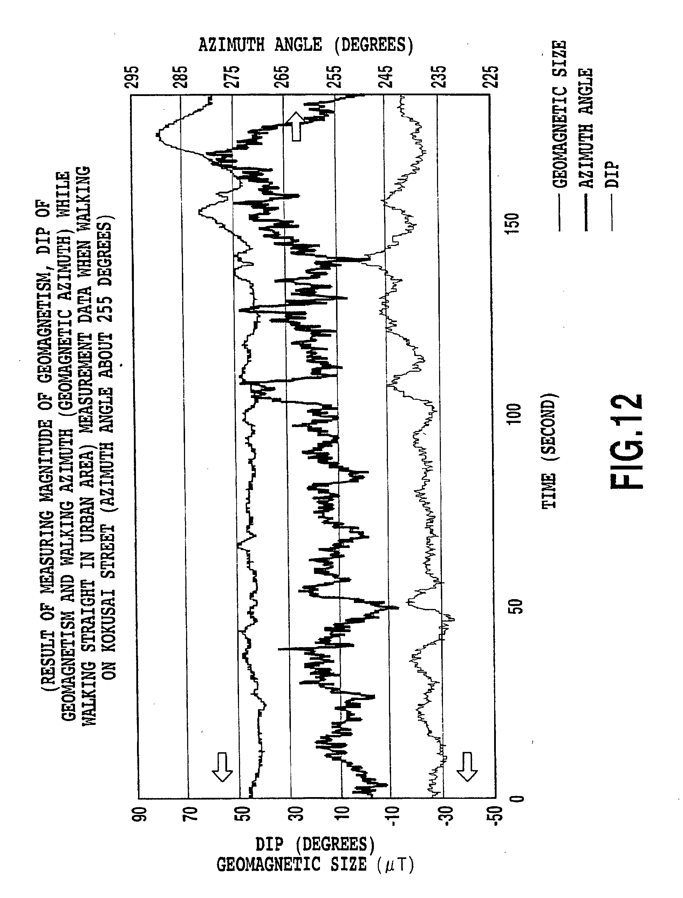

FIG. 12 is a diagram showing a result of measuring the magnitude of the geomagnetism, the dip of the geomagnetism and a walking azimuth (a geomagnetic azimuth) while walking straight in an urban area.
Since the walking speed is approximately one meter per second when the data shown in FIG. 12 is obtained, the unit of the horizontal axis is considered to be approximately m (meter). It is found that the geomagnetism varies depending on the location. A magnetic substance such as iron included in a building draws the geomagnetism, and thus the geomagnetism is not generally uniform around an artificial building.
For this reason, even if geomagnetic measurement data obtained by an azimuth measuring device is randomly extracted and an offset contains [Formula 2], accurate values are not necessarily obtained.
When the method disclosed in patent document 8 is used for determining an offset from an intersection between perpendicular bisectors, if at least two pieces of magnetic data for setting individual perpendicular bisectors are obtained at locations where the magnitude of the geomagnetism is the same, the offset of a sensor can be determined even if the magnitude of the geomagnetism observed at locations where all the magnetic data is acquired is not equal to each other.
In combination with [Formula 2], techniques for estimating an offset with high reliability are disclosed in patent documents 1, 2 and 3. In patent document 1, for example, the difference between the maximum value and the minimum value of each axial component of a measurement data group that is used for estimation with [Formula 2] is calculated, and the estimated reference point is used as the offset if the difference is equal to or more than a predetermined value. Even when a data group is obtained at a location where the magnitude of the geomagnetism is different, the accuracy of the estimated reference point can be improved on condition that the data group is distributed over a wide region.
The difference (i.e. variation) between the maximum value and the minimum value of each axial component of a reference point group that is periodically estimated is calculated, and the estimated reference point is used as the offset when the difference is not more than a predetermined value. When a variation in the estimated reference point is small, the measurement data group used for estimation is highly likely to be obtained under a uniform geomagnetism circumstance.
In patent document 3, the measurement data group used for estimation is applied to a plane, the distance between the plane and the measurement data group is calculated. The estimated reference point is used as the offset when the maximum value of the distance is equal to or more than a predetermined value.
Patent document 2 discloses a method in which the predetermined value is periodically set tight (for example, every time an offset is obtained a predetermined number of times) , or the predetermined value is set loose when a specific event occurs (for example, every time a magnetic substance component such as a memory card is attached on a portable terminal). Thus, the reliability is low immediately after a portable device is operated but an offset is estimated rapidly and then the reliability of the offset is gradually improved.

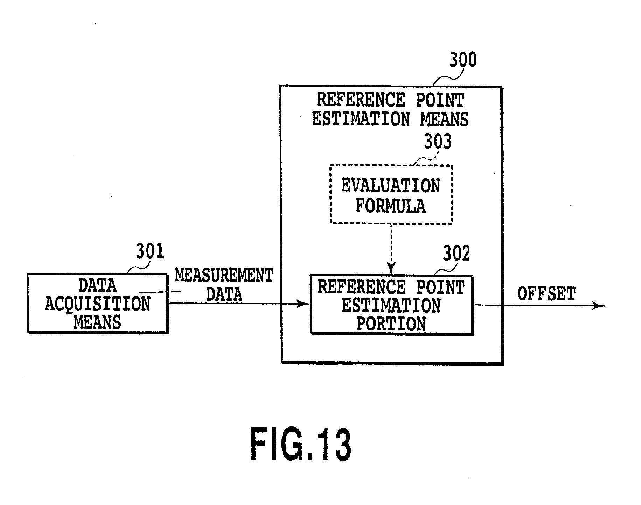

FIG. 13 is a block diagram showing the configuration of a reference point estimation means 300 of prior art.
The reference point estimation means 300 stores data obtained by a data acquisition means 301 as required. A reference point estimation portion 302 estimates a reference point included in data output from the data acquisition means 301 based on a predetermined evaluation formula 303 by using the stored data group, and outputs the reference point as an offset. Generally, the reliability of the estimated reference point is checked (Patent documents 1, 2 and 3), and only the reference point that is determined to be reliable is output as the offset.
However, any of the above-described conventional methods is a method for improving the probability that an accurate reference point is employed as an offset, and may erroneously use an inaccurate reference point depending on data used for estimation. It takes long time until the offset is obtained, when the predetermined value is set tight such that the inaccurate reference point is not used by mistake.
Generally, it is very difficult to set predetermined values that satisfies a plurality of specifications (such as the required average accuracy of an offset, the frequency at which an inaccurate offset is obtained and a time necessary to obtain the offset) required by a system employing an azimuth measuring device.
Since the gravitational acceleration varies little even when the location is changed, an highly accurate offset can be obtained from [Formula 2] when pure gravitational acceleration data excluding motion acceleration is obtained.

As disclosed in patent document 5, the measurement data excluding motion acceleration can be obtained by determining whether a motion of a portable device is stationary. For example, if a variation in each measurement axe of acceleration measurement data group obtained during a predetermined period T is not more than a predetermined range TH, the portable device can be determined to be stationary. When the period T is longer and the range TH is smaller, the probability that motion acceleration included in the measurement data is decreased, but it takes long time until stationary data is obtained (therefore, it takes a long time to obtain the offset). When the period T and the range TH are set loose such that time is shortened until an offset is estimated, the obtained stationary data may include motion acceleration.

Even when a user of a portable terminal does not move the terminal, erroneous gravitational acceleration data may be obtained. For example, an elevator accelerates or decelerates at a constant acceleration of about 0.1 G ($\approx$ 1 m/s$^2$) . As technique is advanced, a vibration during an upward or downward movement is eliminated. Thus, it is likely that a stationary acceleration sensor within an elevator receives a constant acceleration of about 1.1 G or 0.9 G, and it often satisfies a stationary judgment criterion mentioned above.

When a portable terminal is accidentally dropped, the acceleration of the portable terminal becomes about 0 G (although it depends on the degree of the rotational movement of the portable terminal). During free fall, the stationary judgment criterion mentioned above is often satisfied.

In conventional way, the reliability of the estimated reference point is calculated by using methods of the azimuth measuring devices disclosed in patent documents 1, 2 and 3 described above. However, it is impossible to determine whether the reference point is estimated from the gravitational acceleration only.

Therefore, an object of the present invention is to provide a vector physical quantity measuring device that can estimate a highly reliable offset even if a measurement data group is not obtained in a space in which the magnitude of a vector physical quantity to be measured is uniform.

It is another object of the present invention to provide a vector physical quantity measuring device that can further enhance the reliability of an estimated offset.

These objects are achieved by the independent claims. Further advantageous embodiments are described in the dependent claims.

According to an aspect of the present invention, there is provided a physical quantity measuring device according to claim 1.

The reference point estimation means comprises: a difference vector calculating portion for calculating the difference vector group using a difference between each components of the obtained vector physical quantity data group; and a reference point estimation portion for estimating coordinates of the reference point that is determined coordinate system consisted by the components of the obtained vector physical quantity data group based on the evaluation formula using the calculated difference vector group to output the coordinates of the estimated reference point as an offset.

The reference point estimation means further comprises: a difference vector reliability calculating portion for determining whether each difference vector of the calculated difference vector group is suited for estimation of the reference point, and outputting only a suitable difference vector group for estimation of the reference point based on a result of the determination.

The reference point estimation means further comprises: a reliability calculating portion for determining the degree of reliability of the estimated reference point by the difference vector group, and outputting only a suitable reference point as an offset based on a result of the determination.

The evaluation formula contains an N-th power of an absolute value of an inner product of the difference vector and a vector connecting a middle point of the difference vector with the reference point.

The N is two.

The reference point estimation means estimates the reference point by using difference vectors that a time difference of obtainment between the obtained two vector physical quantity data is not more than a predetermined value.

The reference point estimation means calculates a magnitude of the difference vector and estimates the reference point by using the difference vectors whose magnitude are not less than a predetermined value.

The reference point estimation means calculates an angle formed between a difference vector calculated from two vector physical quantity data including vector physical quantity data that is newly obtained by the data acquisition means and a difference vector calculated from two vector physical quantity data that is obtained before the newly obtained vector physical quantity data by the data acquisition means, and estimates the reference point with the inclusion of a difference vector calculated from the newly obtained vector physical quantity data if the formed angle is not less than a predetermined value.

The reference point estimation means calculates an angle formed between a difference vector and a vector connecting the middle point of the difference vector with the reference point estimated by the reference point estimation means for each of the difference vector groups used for the estimation of the coordinates of the reference point, and outputs the reference point as an offset if a maximum value of a difference between the formed angle and 90 degrees is not more than a predetermined value.

The reference point estimation means calculates a distance between a foot of a perpendicular line drawn from the estimated reference point to the difference vector and the middle point of the difference vector for each of the difference vector groups used for the estimation of the coordinates of the reference point, and outputs the reference point as an offset if a maximum value of the calculated distance is not more than a predetermined value.

The vector physical quantity detection means detects two-component vector physical quantity, and the reference point estimation means calculates a distance between a perpendicular bisector of the difference vector and the estimated reference point, and outputs the reference point for each of the difference vector groups used for the estimation of the coordinates of the reference point as an offset if a maximum value of the calculated distance is not more than a predetermined value.

The vector physical quantity detection means detects three-component vector physical quantity detection means, and the reference point estimation means calculates a distance between a perpendicular bisector plane of the difference vector and the estimated reference point for each of the difference vector groups used for the estimation of the coordinates of the reference point, and outputs the reference point as an offset if a maximum value of the calculated distance is not more than a predetermined value.

The vector physical quantity detection means is a magnetic sensor that detects magnetism as the physical quantity.

The vector physical quantity detection means is an acceleration sensor that detects acceleration as the physical quantity.

According to an aspect of the present invention, there is provided a physical quantity measuring method according to claim 15.

According to the present invention, a vector physical quantity composed of a plurality of components is repeatedly detected and is obtained as vector physical quantity data, and thus a vector physical quantity data group is obtained. A difference vector group is calculated from the obtained vector physical quantity data group. A reference point included in the obtained vector physical quantity data group is estimated based on a predetermined evaluation formula using the calculated difference vector group. Therefore, it is possible to estimate an offset with high reliability even if the measurement data group is not a measurement data group that is obtained in a space in which the magnitude of a vector physical quantity as a measurement object is uniform.

According to the present invention, it is determined that whether each difference vector of the calculated difference vector group is suitable for the estimation of the reference point. Only a suitable difference vector group is used for the estimation of the reference point based on the determination result. Degree of reliability of the estimated reference point is judged by using the difference vector group. Only a reliable reference point is output as an offset based on the judged result. Therefore, it is possible to further improve the reliability of the estimated offset.

BRIEF DESCRIPTION OF THE DRAWINGS

FIG. 1 is a block diagram schematically showing the overall configuration of a physical quantity measuring system according to a first embodiment of the present invention.

FIG. 2 is a block diagram showing a configuration example of the of a reference point estimation means.

FIG. 3 is a flowchart showing an outline of the measurement of a physical quantity in a physical quantity measuring device.

FIG. 4 is a diagram showing a method of estimating an offset by using a data group obtained under a circumstance where the geomagnetism size is non-uniform.

FIG. 5 is a block diagram showing another configuration example of the reference point estimation means of FIG. 2 according to a second embodiment of the present invention.

FIG. 6A is a diagram that illustrates a relationship between a difference vector utilized for estimation of a reference point, noise included in measurement data and an offset, showing an example that a magnitude of the difference vector is large.

FIG. 6B is a diagram that illustrates the relationship between the difference vector utilized for estimation of the reference point, noise included in the measurement data and the offset, showing an example that a magnitude of the difference vector is small.

FIG. 7A is a diagram that illustrates a relationship between the difference vector utilized for estimation of the reference point, a time difference in the acquisition of measurement data for the difference vector and an offset, showing an example that the time difference is small.

FIG. 7B is a diagram that illustrates the relationship between the difference vector utilized for estimation of the reference point, the time difference in the acquisition of the measurement data for the difference vector and the offset, showing an example that the time difference is large.

FIG. 8A is a diagram that illustrates, when noise is included in the measurement data, a relationship between an angle formed among the difference vectors utilized for estimation of the reference point and the offset, showing an example that the angle formed among the reference vectors is small.

FIG. 8B is a diagram that illustrates, when noise is included in the measurement data, a relationship between an angle formed among the difference vectors utilized for estimation of the reference point and the offset, showing an example that the angle formed among the reference vectors is large.

FIG. 9 is a block diagram showing a configuration example of a reference point estimation portion 42 shown in FIG. 4 according to a third embodiment of the present invention.

FIG. 10A is a diagram that illustrates a relationship between a true offset, an estimated reference point and a vector drawn from the estimated reference point to the middle point of the difference vector used for estimation, showing an example that the reference point is estimated on the difference vector comprised of the measurement data with no noise.

FIG. 10B is a diagram that illustrates the relationship between the true offset, the estimated reference point and the vector drawn from the estimated reference point to the middle point of the difference vector used for estimation, showing an example that the reference point is estimated on the difference vector comprised of the measurement data with noise.

FIG. 11 is a diagram illustrating the concept of a method of estimating an offset in a conventional azimuth measuring device.

FIG. 12 is a diagram showing a result of measuring, while walking straight in an urban area, the magnitude of the geomagnetism, the dip of the geomagnetism and a walking azimuth (a geomagnetic azimuth).

FIG. 13 is a block diagram showing the configuration of a conventional reference point estimation means.

FIG. 14 is a diagram illustrating the concept that an offset is estimated by using [Formula 7] and the method disclosed in document 8.

FIG. 15 is a diagram illustrating the estimation variation of offsets that are estimated with [Formula 7] .

FIG. 16 is a diagram illustrating the estimation variation of offsets that are estimated with the method disclosed in document 8.

BEST MODE FOR CARRYING OUT THE INVENTION

Embodiments of the present invention will be described in detail below with reference to the accompanying drawings.

[First example]

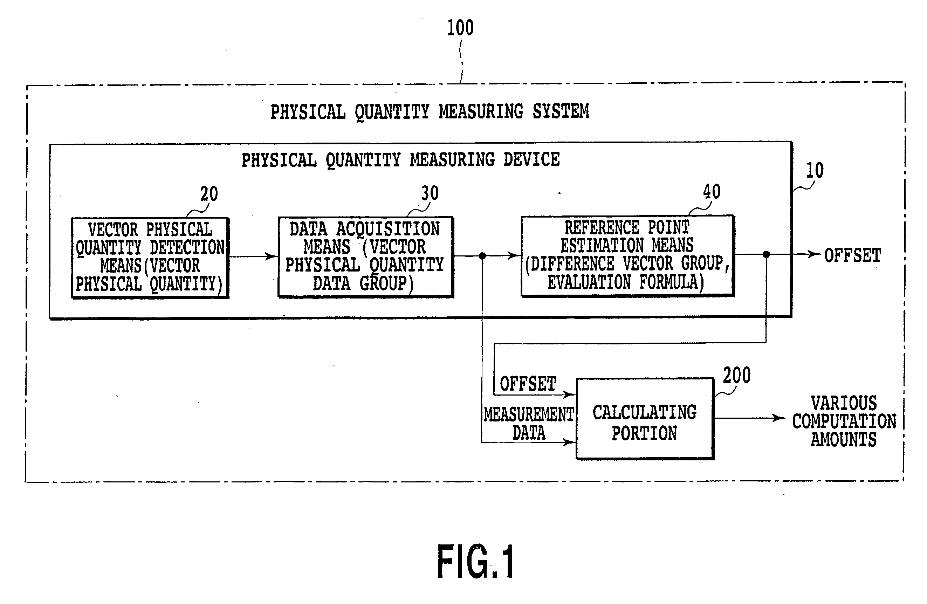

The first example of the present invention will be described based on FIGS. 1 to 4.

<Configuration>

FIG. 1 schematically shows the overall configuration of a physical quantity measuring system 100.

The physical quantity measuring system 100 includes a physical quantity measuring device 10 and a calculating portion 200.

The physical quantity measuring device 10 includes a vector physical quantity detection means 20, a data acquisition means 30 and a reference point estimation means 40.

The vector physical quantity detection means 20 detects a vector physical quantity composed of a plurality of components.

The data acquisition means 30 repeatedly obtains the detected vector physical quantity as vector physical quantity data to make up a vector physical quantity data group.

The reference point estimation means 40 calculates a difference vector group from the acquired vector physical quantity data group, estimates, based on a predetermined evaluation formula using the calculated difference vector group, a reference point included in the vector physical quantity data group to output the estimated reference point as an offset.

The calculating portion 200 calculates information necessary for the system based on the vector physical quantity data group obtained by the physical quantity measuring device 10 and the estimated offset.

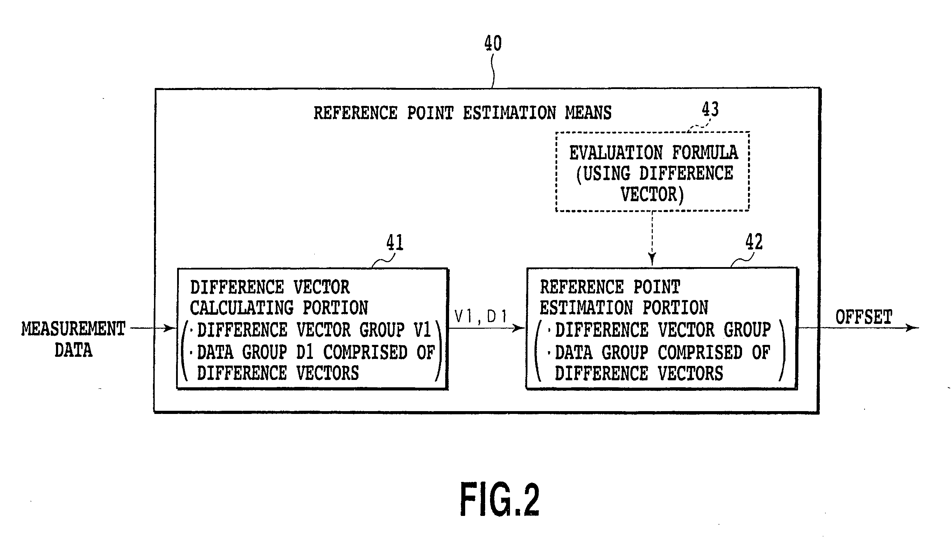

FIG. 2 shows a configuration example of the reference point estimation means 40.

The reference point estimation means 40 includes a difference vector calculation portion 41 and a reference point estimation portion 42.

The difference vector calculating portion 41 calculates a difference vector group (V1) from differences between the components of the obtained vector physical quantity data group.

Based on an evaluation formula 43 using the calculated difference vector group (V1) and a vector physical quantity data group (D1) that is used for calculating the difference vector, the reference point estimation portion 42 statistically estimates the coordinates of a reference point on a coordinate system where each component of vector physical quantity data group constitute coordinate value, and outputs the coordinates of the estimated reference point as an offset.

A specific configuration example of each portion will be described below.

The vector physical quantity detection means 20 detects a physical quantity composed of two components or three components, and outputs a signal corresponding to the detected physical quantity. The physical quantity as a measurement object, for example, includes the geomagnetism and acceleration.

As a configuration of the vector physical quantity detection means 20, for example, a magnetic sensor that detects magnetism and outputs a voltage proportional to the detected magnetism, an acceleration sensor that detects acceleration and outputs a voltage proportional to the detected acceleration or the like can be used.

The data acquisition means 30 converts the signal output by the vector physical quantity detection means 20 into an output signal that is easily processed by latter blocks (the blocks after the reference point estimation means 40).

The data acquisition means 30, for example, amplifies a signal output by the vector physical quantity detection means 20, converts the amplified signal to a digital signal by A/D conversion form, and outputs the converted digital signal as a digital data. Further, a filtering process may be performed for eliminating noise at the same time of the amplifying process.

Generally, since a sensor represented by a magnetic sensor or an acceleration sensor outputs an extremely weak signal with small level of amplitude, the signal is amplified and filtered to improve S/N (Signal to Noise), and then converted into digital data for easy processing by a computer or the like, to be output. Alternatively, the detected signal may be processed as the analog signal without A/D conversion, and latter processing may be performed by using the analog signal.

<Operation>

The operation of this system will be described below.

(An outline of the measurement of a physical quantity)

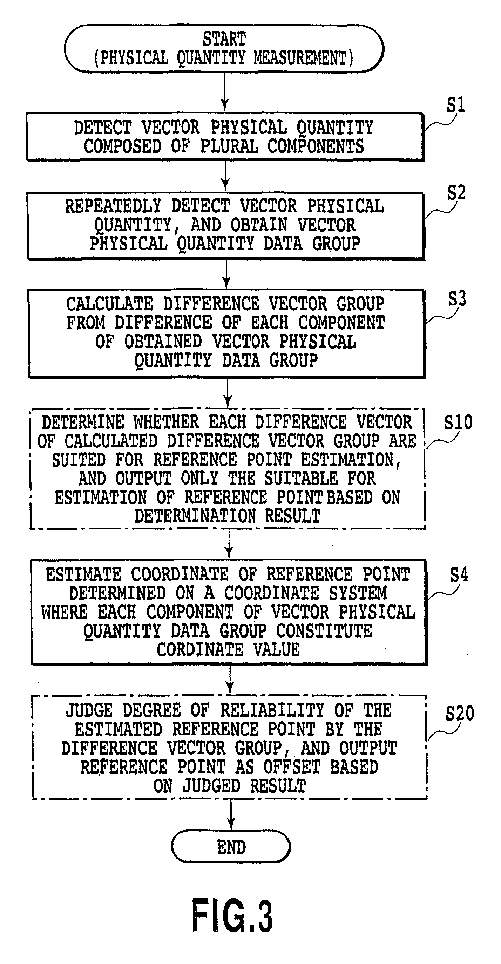

FIG. 3 is a flowchart showing an outline of the measurement of a physical quantity in the physical quantity measuring device 10.

In step S1, the vector physical quantity comprised of a plurality of components is detected.

In step S2, the vector physical quantity is repeatedly detected, and thus the vector physical quantity data group is obtained.

In step S3, a difference of each component of the obtained vector physical quantity data group is calculated, and thus the difference vector group is obtained.

In step S4, based on the evaluation formula 43 that uses the difference vector group, a coordinate of the reference point set on a coordinate system constituted of each component of the obtained vector physical quantity data group is statistically estimated. Thus, the coordinate of the estimated reference point are output as an offset.

A specific example of the measurement of a physical quantity will be described below.

(Estimation of the reference point)

In the reference point estimation means 40 in FIG. 2, the difference vector is calculated from two of the measurement data obtained by the data acquisition means 30 or two data calculated from the measurement data group. Then, as required, the difference vector and data comprised of the difference vector are stored. A reference point of measurement data group obtained by the data acquisition means 30 is estimated based on a predetermined evaluation formula by the stored difference vector group and the data group comprised of the difference vector. Thus, the estimated reference point is output as an offset.

As described later, it becomes possible to estimate an offset from a data group obtained under the circumstance that the magnitude of vector physical quantity is not uniform by using the evaluation formula which uses difference vector.

Two data comprised of the difference vector may be configured by data that obtained by the data acquisition means 30, or may be configured by values that obtained by performing a calculation (for example, averaging)on the measurement data group so as to reduce an effect of noise.

(Computation processing)

In the physical quantity measuring system 100 shown in FIG. 1, the calculating portion 200 receives the measurement data obtained from the data acquisition means 30 and the offset estimated by the reference point estimation means 40 of the physical quantity measuring device 10. Thus, information necessary for the system is calculated.

For example, the physical quantity detection means is a three-axis magnetic sensor and an azimuth measuring device detects the geomagnetism to calculate an azimuth. Using the estimated offset and the obtained measurement data, the value of the geomagnetism is calculated, and the azimuth is calculated.

Specifically, the estimated offset is set to as $(o_x, o_y, o_z)$. Magnetic measurement data is set to as $m = (x_i, y_i, z_i)$ when a portable device incorporating the physical quantity measuring system 100 of the present invention is horizontally placed (the x-measurement axis and the y-measurement axis of the magnetic sensor are on the horizontal plane). Thus, the azimuth of x-measurement axis to the magnetic north is calculated by the following formula.

**[Formula 4]**

$$\theta = \tan^{-1}\left(\frac{-m_y - o_y}{m_x - o_x}\right)$$

It is exampled that the physical quantity detection means 20 is a three-axis acceleration sensor and an inclination angle measuring device calculates the inclination to the horizontal plane of the portable device. In this case, the value of the gravitational acceleration is calculated from the estimated offset and the obtained data. Then, the inclination angle of the portable device is calculated.

Specifically, the estimated offset is set to $(o_x, o_y, o_z)$, and gravitational acceleration measurement data is set to $g = (x_i, y_i, z_i)$. The angle $\Phi$ of the x-measurement axis and the angle $\eta$ of the y-measurement axis to the horizontal plane respectively are calculated by the following formulas.

**[Formula 5]**

$$\varphi = \tan^{-1}\frac{g_x - o_x}{g_z - o_z}$$

$$\eta = \tan^{-1}\frac{g_y - o_y}{g_z - o_z}$$

(Offset estimation method)

As described above, when geomagnetic data is obtained by using the three-axis magnetic sensor under the circumstance that the magnitude of geomagnetism is not varied, the geomagnetic measurement data is distributed on a spherical surface. When the two-axis magnetic sensor is moved on the horizontal plane, the geomagnetic data is distributed on a circle (so-called, an azimuth circle) in which an offset is centered at the circle. For simplification, a two-dimensional case will be primarily described below. A three-dimensional case will be described in the same theory as the two-dimensional case.

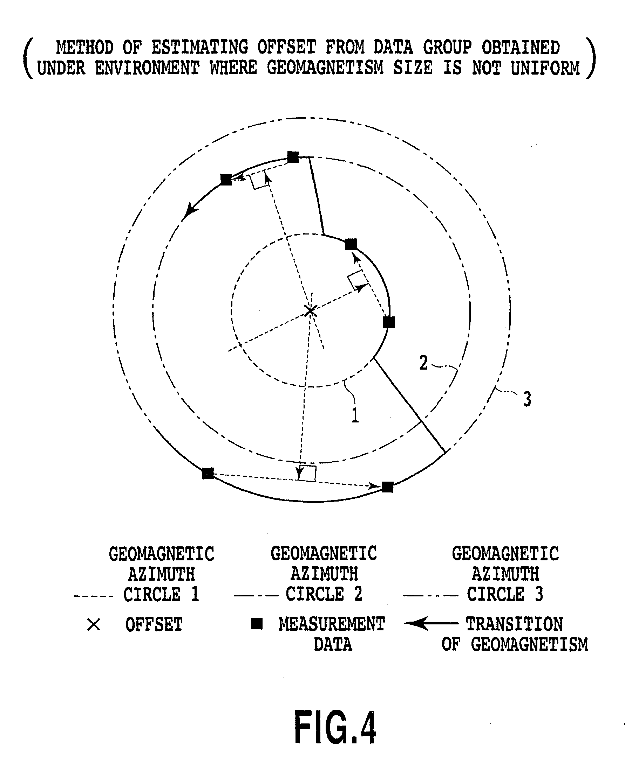

FIG. 4 is a diagram illustrating a method of estimating an offset by using a data group obtained from the circumstance that the size of geomagnetism is not uniform.

For example, FIG. 4 shows a variation of time to the magnetism detected by a two-axis magnetic sensor fixed horizontally on the dashboard of an automobile. Generally, an automobile rapidly moves under various magnetic circumstances. For example, a bridge is often an iron-based structure, and a large amount of the geomagnetism is induced into such structure. Then, the magnitude and direction of geomagnetism are varied. An iron-based structure may be buried under a road. In the case of a road in a city, the geomagnetism is also affected by buildings around the road. Thus, measurement values of the geomagnetism detected by the magnetic sensor mounted within the automobile are not distributed on only one circle, but are distributed on a plurality of circles located concentrically. Therefore, the accuracy of an offset calculated by [Formula 2] (a formula acquired by correcting [Formula 2] in terms of two components) is not of high precision.

FIG. 4 is a diagram for the concept of the present invention, and shows magnetic data obtained when the automobile moves under three regions that the magnitude of the geomagnetism is different.

The perpendicular bisectors of two geomagnetic data obtained in a region of the same magnitude of the geomagnetism pass through the offset. When two pairs of geomagnetic data is obtained in the region that the magnitude of the geomagnetism is the same value, the offset can be estimated from the perpendicular bisectors. Actual geomagnetic measurement data often includes noise, and it is not necessarily possible to obtain two geomagnetic data in the region that the magnitude of the geomagnetism is the same value. Thus, it is preferable to statistically determine the offset from a plurality of pairs of data.

Two-axis measurement data group that is repeatedly obtained by the geomagnetic sensor is set to $m_i = (x_i, y_i)$. An offset included in the measurement data of the geomagnetic sensor is set to $o = (o_x, o_y)$. The inner product between the difference vector comprised of two geomagnetic data on one azimuth circle and a vector connecting the offset of the geomagnetic sensor with the middle point of the difference vector is zero.

Actually, the magnitude of the geomagnetism varies when a location is a little changed. Thus, it is difficult to obtain two measurement data on the same azimuth circle, but it may be considered that two data obtained in close locations (that is, close in time) exist on the same azimuth circle substantially. Even when the magnitude of the azimuth circle varies with time, if a pair of pieces of measurement data on the azimuth circle of the same (substantially the same) magnitude can be obtained, the inner products determined from each pair of measurement data are all close to zero. The square of the absolute value of the inner product determined from all pairs of the measurement data is represented by the following formula.

**[Formula 6]**

$$S = \sum_i \left\| (m_{2i+1} - m_{2i}) \cdot \left( \frac{m_{2i} + m_{2i+1}}{2} - o \right) \right\|^2$$

Ideally, the value of "S" is zero. Actually, since the measurement value may include noise and may be a pair of measurement data that does not exactly exist on the same azimuth circle, the value of "S" is approximately zero. The method of estimating "o" according to the invention is to minimize [Formula 6]. As the method of minimizing [Formula 6], there is a method of using iteration such as a Newton-Raphson method to determine "o" asymptotically. Further, it is possible to analytically determine "o" value by solving the following simultaneous equation.

**[Formula 7]**

$$\begin{bmatrix} \sum_i (x_{2i+1} - x_{2i})^2 & \sum_i (x_{2i+1} - x_{2i})(y_{2i+1} - y_{2i}) \\ \sum_i (x_{2i+1} - x_{2i})(y_{2i+1} - y_{2i}) & \sum_i (y_{2i+1} - y_{2i})^2 \end{bmatrix} \begin{bmatrix} o_x \\ o_y \end{bmatrix}$$
$$= \frac{1}{2} \begin{bmatrix} \sum_i (x_{2i+1}^2 - x_{2i}^2 + y_{2i+1}^2 - y_{2i}^2)(x_{2i+1} - x_{2i}) \\ \sum_i (x_{2i+1}^2 - x_{2i}^2 + y_{2i+1}^2 - y_{2i}^2)(y_{2i+1} - y_{2i}) \end{bmatrix}$$

In alternatives not being part of the scope of the invention, since the perpendicular bisector of a difference vector formed from two points on one azimuth circle passes through the center point of the azimuth circle, an evaluation formula [Formula 8] or [Formula 9] can be defined instead of [Formula 6]. It is also possible to determine "o" such that the evaluation formula gives the minimum value.

**[Formula 8]**

$$S = \sum_i \left\| m_{2i} + \left( (o - m_{2i}) \cdot \frac{(m_{2i+1} - m_{2i})}{\|m_{2i+1} - m_{2i}\|} \right) \frac{(m_{2i+1} - m_{2i})}{\|m_{2i+1} - m_{2i}\|} - \frac{m_{2i} + m_{2i+1}}{2} \right\|^2$$

**[Formula 9]**

$$\sum_i \left| \frac{\left(m_{2i+1} - m_{2i}\right) \cdot \left(o - \frac{m_{2i} + m_{2i+1}}{2}\right)}{\|m_{2i+1} - m_{2i}\|} \right|^2$$

As shown in Formula 8, the square of the distance between the middle point of a difference vector comprised of two measurement data and a point as a foot of a perpendicular drawn from the reference point to the difference vector is calculated for each difference vector. Thus, Formula 8 represents that the sum of value of the square of the distance calculated per each difference vector.

As shown in Formula 9, the square of the distance between the perpendicular bisector of a difference vector comprised of two measurement data and the reference point is calculated per each difference vector. Thus, Formula 9 represents that the sum of values of the square of the distance calculated per each difference vector. In the case of a three-component physical quantity detection device, the square of the distance between the perpendicular bisector plane of a difference vector comprised of two measurement data and the reference point is calculated per each difference vector, and thus the sum of values of the square of the distance calculated for each difference vector. The description of [Formula 9] of the three-component physical quantity detection device is the same as that of the two-component physical quantity detection device because [Formula 9] is represented by using a vector description.

[Formula 8] and [Formula 9] are the same formula except that the induced process of determining the formula is different.

As the method of minimizing [Formula 8] and [Formula 9], there is a method of using an iteration such as a Newton-Raphson method to determine "o" asymptotically.

Although [Formula 6], [Formula 8] and [Formula 9] are formed such that the sum of the squares of the absolute values, they may be generally formed such that the sum of the N-th powers of the absolute values is determined. For example, instead of the evaluation formula [Formula 6], the following formula may be used.

**[Formula 10]**

$$S = \sum_i \left| \left(m_{2i+1} - m_{2i}\right) \cdot \left(\frac{m_{2i} + m_{2i+1}}{2} - o\right) \right|^N$$

When the N becomes larger, the amount of calculation is generally increased and the range of values processed in the calculation step is extended. Thus, it is not applicable to a system in which the number of bits representing values is limited.

The perpendicular bisector of two difference vectors passes through the reference point when the physical quantity detection means detects a two-component physical quantity (In the case of a three-component physical quantity, the perpendicular bisector plane of three difference vectors is used). Thus, some pairs of two difference vectors are made, and the intersection of the perpendicular bisector is calculated per each pair. Then, the N-th power of the sum of the distance between the intersection calculated per the each pair and the reference point may be determined as an evaluation formula ( [Formula 11]), not part of the scope of the invention.

**[Formula 11]**

$$S = \sum_i \|C - o\|^N,$$

$$C = \left[ \begin{array}{c} \left(m_{2i+1} - m_{2i}\right)^T \\ \left(m_{2j+1} - m_{2j}\right)^T \end{array} \right]^{-1} \left[ \begin{array}{c} \left(\frac{m_{2i} + m_{2i+1}}{2}\right) \cdot \left(m_{2i+1} - m_{2i}\right) \\ \left(\frac{m_{2j} + m_{2j+1}}{2}\right) \cdot \left(m_{2j+1} - m_{2j}\right) \end{array} \right]$$

Here, as to a vector "a", aT represents a horizontal vector.

Further, a method for determining a specific point from a plurality of difference vectors (For example, "A" difference vectors) is defined. Some sets of "A" difference vectors are made, the specific point is calculated per each sets. Thus, a formula for determining the N-th power of the sum of the distances between the specific points calculated per the each sets and the reference point may be determined as an evaluation formula.

For example, $(o_x, o_y)$ obtained by solving [Formula 6] from three difference vectors can be defined as the specific point.

[Second example]

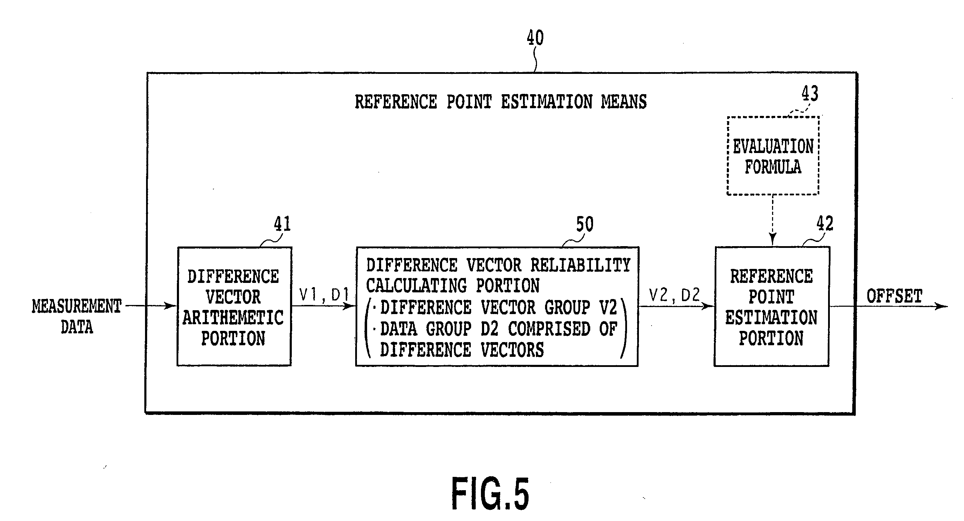

The second embodiment of the present invention will be described based on FIGS. 5 to 8. The same parts as those of the above-described first example are identified with like reference numerals, and their description will be omitted.

FIG. 5 shows another configuration example of the reference point estimation means 40 shown in FIG. 2.

The reference point estimation means 40 further comprises a difference vector reliability calculating portion 50.

As shown in FIG. 3 described above, in step S10, the difference vector reliability calculating portion 50 determines whether each difference vector of the calculated difference vector group is suitable for the estimation of the reference point, and outputs only a suitable difference vector group for the estimation of the reference point based on the determination result.

The function of the difference vector reliability calculating portion 50 will be described below.

The accuracy of estimating an offset may be not high precision depending on how two data constituting the difference vector are selected. The following reasons are described. Even if the difference vector is calculated from any two data obtained by the data acquisition means 30 of FIG. 1 and the "o" is determined so as to minimize the evaluation formulas [Formula 6], [Formula 8] and [Formula 9], generally measurement data includes noise and two data constituting the difference vector are not necessarily located on one azimuth circle. For this reason, it is preferred that only the difference vector suitable for the estimation of the reference point is selected and the reference point is estimated.

In FIG. 5, the difference vector reliability calculating portion 50 determines, with one or a plurality of methods, whether each difference vector of the difference vector group output from the difference vector calculating portion 41 is suitable for the estimation of the reference point. The difference vector reliability calculating portion 50 outputs, to the reference point estimation portion 42, a difference vector group V2 that is comprised of only difference vectors determined to be suitable for the estimation of the reference point and a data group D2 that constitutes the difference vector group (a group of pieces of vector physical quantity data used for calculation of each difference vector) .

(Example 1 for estimation of the reference point)

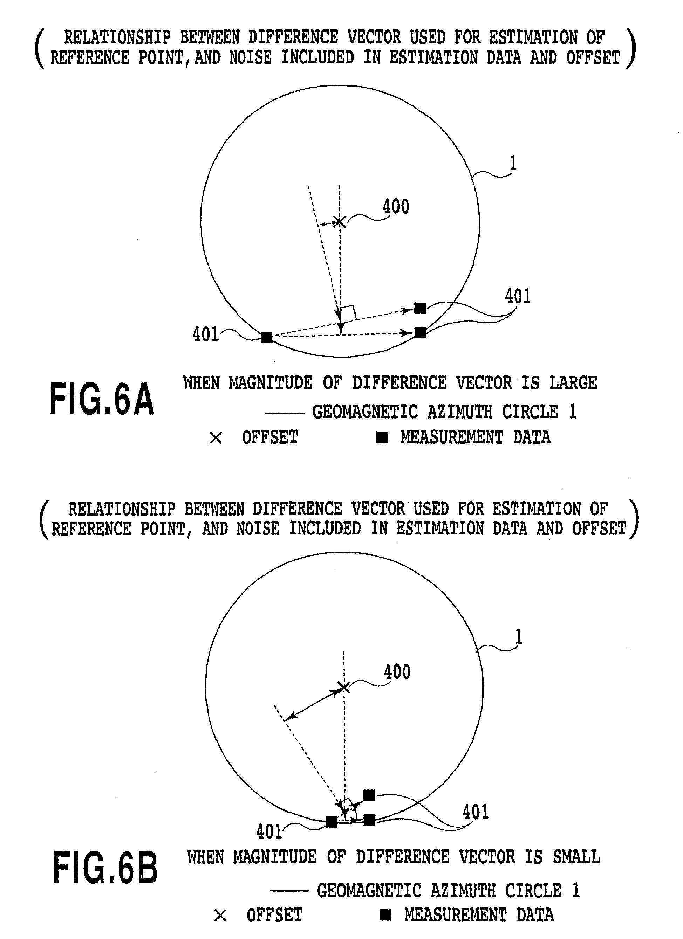

FIGS. 6A and 6B are diagrams that show a relationship among the difference vector utilized for estimation of the reference point, noise included in the measurement data 401 and the offset 400.

FIG. 6A shows an example that the magnitude of the difference vector is large. FIG. 6B shows an example that the difference vector is small.

FIGS. 6A and 6B show a relationship between the perpendicular bisector of the difference vector and the center of the azimuth circle when noise is included in one datum of one pair of data.

It is understood that, as the magnitude of the difference vector becomes smaller, the perpendicular bisector of the difference vector get away from the center of the azimuth circle even under the same noise. Thus, it is understood that, in order to reduce an error in estimation resulting from the effect of the noise, it is desirable to use a difference vector of as large as possible for the estimation of the reference point.

However, to use two magnetic data obtained at locations remote from each other (remote times) in order to obtain a large difference vector is not desirable because the magnitude of the geomagnetism varies depending on a location as describe above. Therefore, the obtained times of the two magnetic data for calculating the difference vector should be determined to be a predetermined value or less.

The difference of the technologies between the present invention and document 8 will be described below.

In a place such as an urban area where there are a large number of artificial structures, a region where the geomagnetism is uniform is extremely small. Thus, two magnetic data are obtained by a pedestrian even if times are close to each other, in almost all cases, the magnitudes of the geomagnetism at locations where magnetic data are obtained do not completely match with each other. The magnetic data often includes noise due to the effects of a magnetized mobile unit such as an automobile and various currents that occur indoors and outdoors.

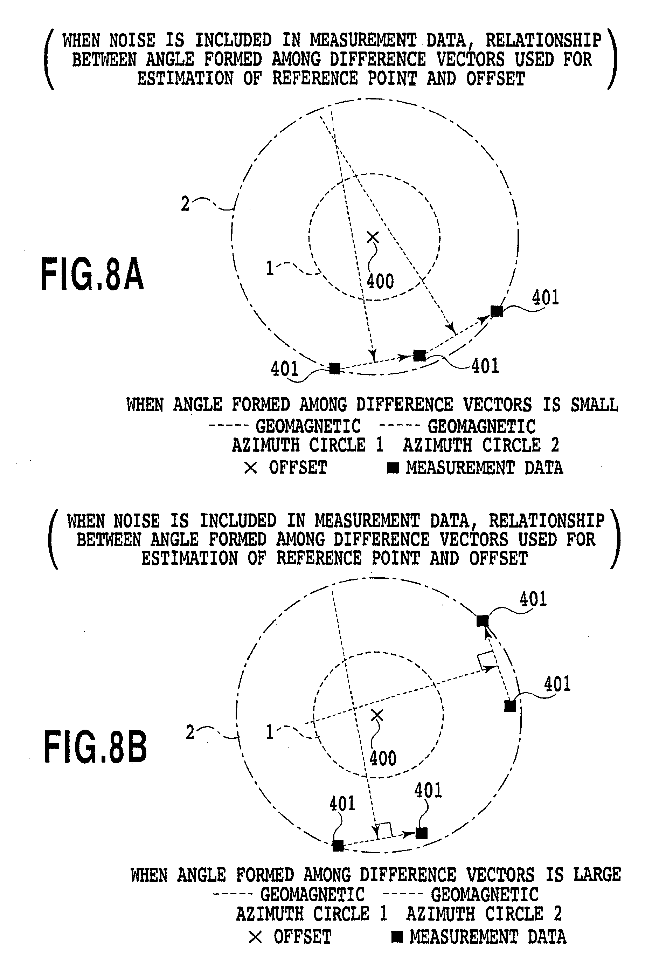

FIGS. 8A and 8B are diagrams showing a relationship between an intersection between two perpendicular bisectors set by the geomagnetic data including noise and a true offset. When the magnetic data includes noise, a large amount of errors are included depending on the perpendicular bisector used for the estimation of an offset.

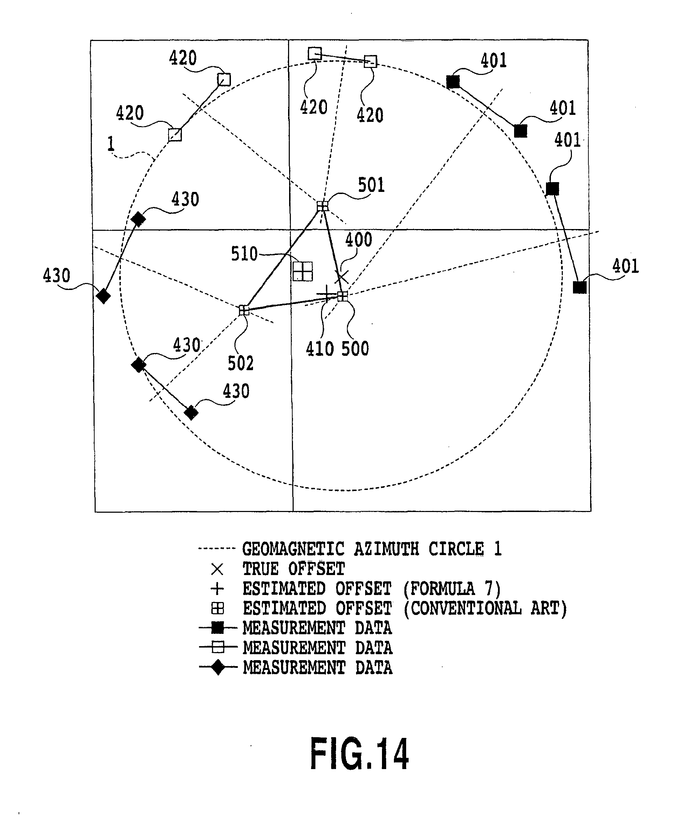

FIG. 14 is a diagram illustrating the concept of a case where an offset is estimated by use of [Formula 7] and the method disclosed in document 8.

In FIG. 14, a true offset of the geomagnetic sensor is represented by "X", and an azimuth circle drawn according to measurement values of the geomagnetic sensor is represented by a dotted line. Here, the reference numeral 410 represents an offset estimated by [Formula 7] from 12 points of magnetic data. The reference numeral 510 represents an offset estimated from document 8.

The offset 410 estimated by [Formula 7] is determined from all 12 points of magnetic data at a time.

In document 8, the offset 510 is estimated as the following steps. First, an intersection of two bisectors is determined from four points that are respectively represented by measurement data 401, measurement data 420 and measurement data 430. Next, three intersections that are finally determined are averaged. Noise not more than 10% of a radius of the azimuth circle is included in all magnetic data.

As shown in FIG. 14, the offset 410 determined from [Formula 7] of the present invention is not equal to the offset 510 determined by the method disclosed in document 8.

According to the method of the present invention, noises superimposed on the difference vector are cancelled each other due to a random characteristic. Even if the noise is superimposed on the difference vector, an offset value close to a true value can be calculated.

On the other hand, in the method of document 8, a perpendicular bisector connecting two points that are located a relatively short distance apart is used. Further, the intersection is determined by two perpendicular bisectors that are relatively close to each other and the determined intersection is averaged. In this case, noises included in the two perpendicular bisectors that are relatively close to each other are not always cancelled each other, and noises included in the offset value are increased. Thus, the offset value may be greatly different from the true value. Here, even if a plurality of intersections between the perpendicular bisectors is averaged, noises are not cancelled each other. The error between the true value and the determined offset is probably increased.

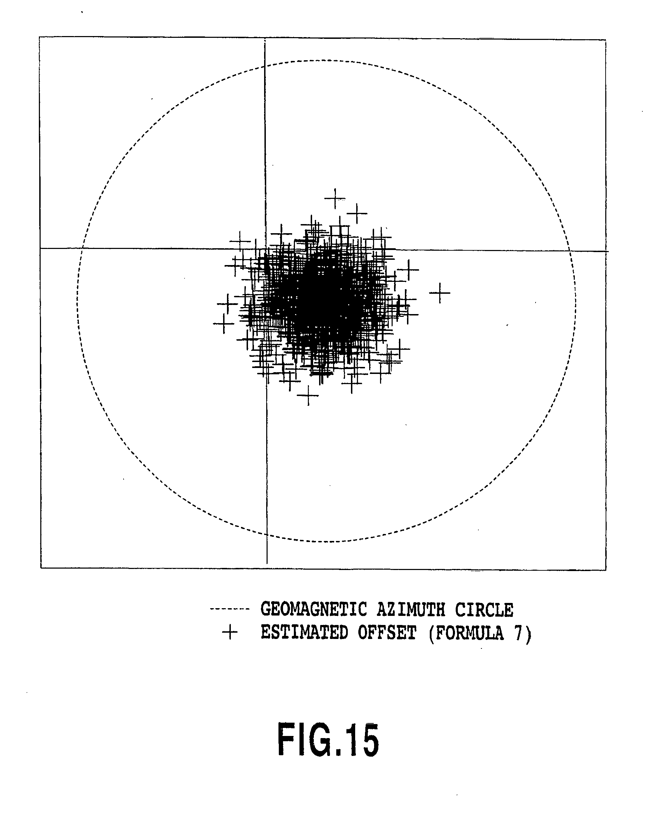

FIG. 15 is a diagram showing all the offsets that are estimated by performing an offset estimation with [Formula 7] of the present invention 1000 times.

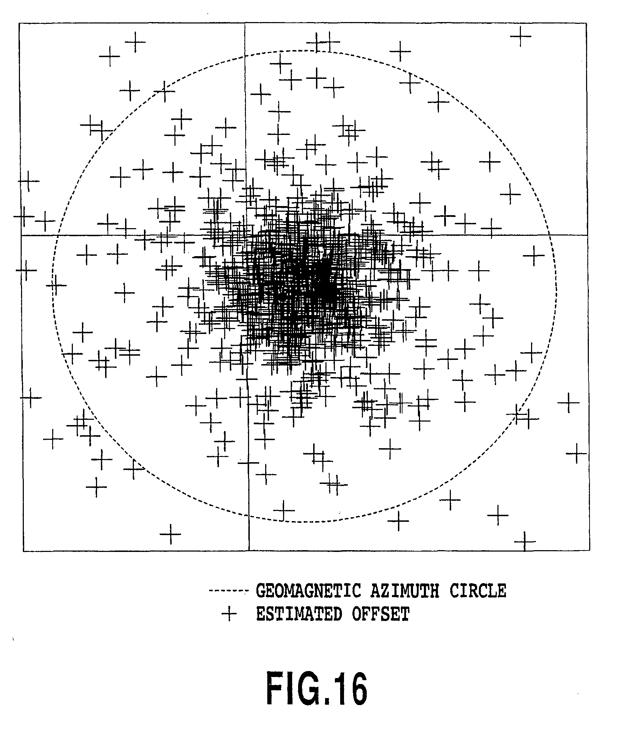

FIG. 16 is a diagram showing all the offsets that are estimated by performing an offset estimation with the method of document 8 1000 times.

In FIGS. 15 and 16, the offset is estimated from the same magnetic data each time. From the result of the comparison between two drawings, estimation precision of the offset according to the method of the present invention is higher than that of the conventional method.

(Example 2 for estimation of the reference point)

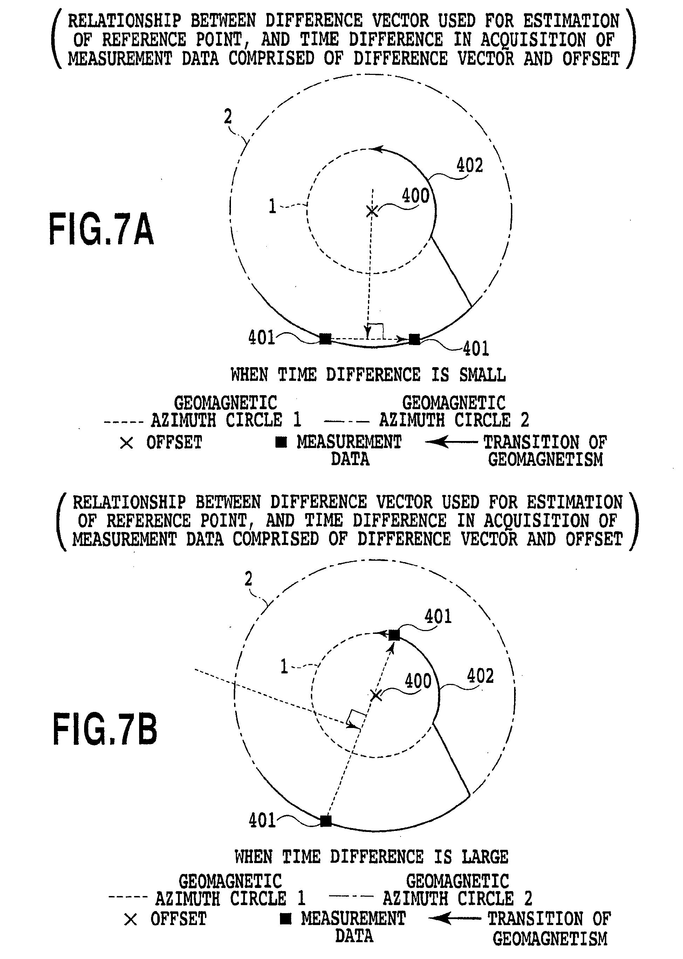

FIGS. 7A and 7B are diagrams that show a relationship between the difference vector utilized for estimation of the reference point, a time difference in the obtainment of measurement data 401 comprising the difference vector and the offset 400.

FIG. 7A shows an example of a case where the time difference is small. FIG. 7B shows an example of a case where the time difference is large.

FIGS. 7A and 7B show that the perpendicular bisector of a difference vector calculated from the measurement data 401 that is not located on the same azimuth circle may be located far away from a point showing the offset 400 even if the magnitude of the difference vector is large. The reference numeral 402 represents geomagnetic transition.

(Example 3 for estimation of the reference point)

FIGS. 8A and 8B are diagrams showing a relationship an angle formed among the difference vectors utilized for estimation of the reference point and the offset 400 when noise is included in the measurement data 401

FIG. 8A shows an example of a case where the angle formed between the difference vectors is small. FIG. 8B shows an example of a case where the angle formed between the difference vectors is large.

FIGS. 8A and 8B show, when noise is included in the measurement data 401, a relationship between an angle formed among the difference vectors utilized for estimation of the reference point and the offset 400. An estimated reference point (an intersection between two difference vectors) may be located far away from a true offset when an angle formed between two difference vectors (substantially parallel to each other) is small.

On the other hand, when an angle formed between two difference vectors is close to 90 degrees (a right angle), it is hard to be affected by the noise. In the case that an offset is statistically estimated from a large number of difference vectors, it is hard to be affected by the noise when the difference vectors are equally distributed in each direction.

From the problems of memory and computing power, it may be difficult in that storing all measurement data in memory of a portable device and calculating difference vectors distributed in each direction by using the stored measurement data. In a small-sized system such as a portable device, a method for obtaining difference vectors of various directions as the following.

Specifically, on the basis of a difference vector that is previously determined to be reliable by the difference vector reliability calculation means, when an angle formed between the difference vector and a newly calculated difference vector is not less than a predetermined angle, the newly calculated difference vector is used for the estimation of the reference point as a reliable difference vector. On the other hand, when the angle formed is not more than the predetermined angle, the newly calculated difference vector is determined to be unreliable and then is discarded. In this way, it is possible to avoid the estimation of the reference point by only using difference vectors indicating in the same direction.

[Third example]

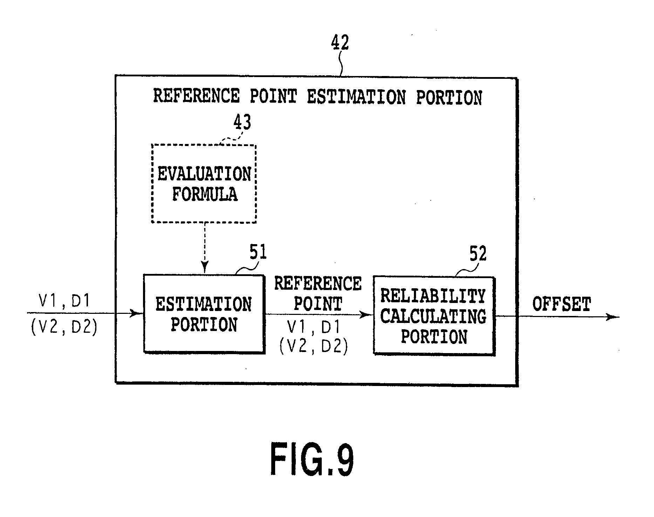

The third embodiment of the present invention will be described based on FIGS. 9 to 10B. The same parts as those of the above-described examples are identified with like symbols, and their description will be omitted.

FIG. 9 shows a configuration example of the reference point estimation portion 42 shown in FIG. 5.

The reference point estimation portion 42 includes an estimation portion 51 and a reliability calculating portion 52.

The estimation portion 51 estimates the reference point included in the vector physical quantity data group based on the evaluation formula 43 using the calculated difference vector group.

As shown in FIG. 3 described previously, in step S20, the reliability calculating portion 52 determines the degree of reliability of the estimated reference point with the difference vector group, and outputs only a reliable reference point as an offset based on the determination result.

The function of the reliability calculating portion 52 will be specifically described below.

As described above, the measurement data includes noise and the magnitude of the geomagnetism varies. Thus, the estimated reference point generally includes an error. It is necessary to check the degree of reliability of the estimated reference point. The estimated reference point is outputted as an offset only if it is determined to be reliable.

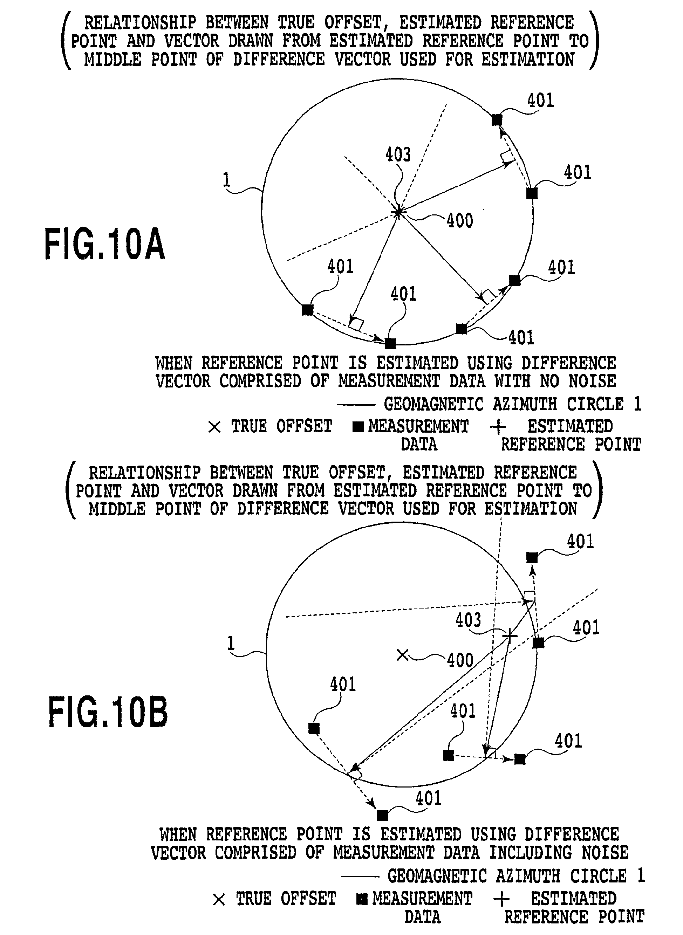

FIGS. 10A and 10B are diagrams showing a relationship between the true offset 400, the estimated reference point 403 and a vector drawn from the estimated reference point 403 to the middle point of the difference vector used for the estimation.

FIG. 10A shows an example of a case where the reference point is estimated by using difference vectors comprised of the measurement data 401 with no noise. FIG. 10B shows an example of a case where the reference point is estimated by using difference vectors comprised of the measurement data 401 including noise.

In FIGS. 10A and 10B, when each difference vector used for the estimation is obtained under a circumstance that the magnitude of vector physical quantity is the same value and each difference vector is comprised of the measurement data 401 with no noise, the estimated reference point is consistent with the true offset 400, and the vector connecting the middle point of each difference vector with the reference point is perpendicular to each difference vector.

On the other hand, when each difference vector used for the estimation is obtained under a circumstance that the magnitude of vector physical quantity is different value or each difference vector is comprised of data including noise, the estimated reference point 403 is not consistent with the true offset, and an angle formed between each difference vector and the vector connecting the middle point of each difference vector with the reference point is 90 degrees or less.

For all the difference vectors used for the estimation, an angle formed between the difference vector and the vector connecting the estimated reference point with the middle point of the difference vector is calculated. If the differences between all the calculated formed angles and the angle of 90 degrees are not more than a predetermined value, the estimated reference point is determined to be reliable. On the other hand, at least one of the differences between the formed angles and the angle of 90 degrees is not less than the predetermined value, the estimated reference point is determined to be unreliable and is then discarded. In this way, it is possible to estimate an offset with further improved reliability.

As described above, the geomagnetism, the acceleration or the like is taken as a familiar example of a vector physical quantity to be measured in the present invention. Any other physical quantity such as artificial stationary magnetic field or electric field may be used when variation of the magnitude of a vector physical quantity is slower relative to variation of the relative positional relationship between the vector physical quantity and a vector physical quantity detection means.

**Claims**

1. A physical quantity measuring device for measuring a physical quantity, comprising:

   a vector physical quantity detection means (20) for detecting a vector physical quantity composed of a plurality of components ;
   a data acquisition means (30) for repeatedly obtaining the detected vector physical quantity as vector physical quantity data to obtain a vector physical quantity data group; and
   a reference point estimation means (40) for calculating a difference vector group from the obtained vector physical quantity data group and estimating a reference point included in the obtained vector physical quantity data group based on a predetermined evaluation formula using the calculated difference vector group, wherein the reference point is estimated by minimizing the evaluation formula, wherein the evaluation formula is **characterized in that** the evaluation formula is determined by using an N-th power of an absolute value of an inner product of the difference vector and a vector connecting a middle point of the difference vector with the reference point.

2. The physical quantity measuring device of claim 1,
   wherein the reference point estimation means (40) comprises:

   a difference vector calculating portion (41) for calculating the difference vector group using a difference between each component of the obtained vector physical quantity data group; and
   a reference point estimation portion (42) for estimating coordinates of the reference point that is determined on a coordinate system constituted by the components of the obtained vector physical quantity data group based on the evaluation formula using the calculated difference vector group to output the coordinates of the estimated reference point as an offset.

3. The physical quantity measuring device of claim 1 or 2,
   wherein the reference point estimation means (40) further comprises:

   a difference vector reliability calculating portion (50) for determining whether each difference vector of the calculated difference vector group is suited for estimation of the reference point, and outputting only a suitable difference vector group for estimation of the reference point based on a result of the determination.

4. The physical quantity measuring device of any one of claims 1 to 3
   wherein the reference point estimation means (40) further comprises:

   a reliability calculating portion (52) for determining the degree of reliability of the estimated reference point by the difference vector group, and outputting only a suitable reference point as an offset based on a result of the determination.

5. The physical quantity measuring device of claims 1 to 4, wherein the N is two.

6. The physical, quantity measuring device of any one of claims 1 to 5,
   wherein the reference point estimation means (40) estimates the reference point by using difference vectors that a time difference of obtainment between the obtained two vector physical quantity data is not more than a predetermined value.

7. The physical quantity measuring device of any one of claims 1 to 6,
   wherein the reference point estimation means (40) calculates a magnitude of the difference vector and estimates the reference point by using the difference vectors whose magnitude are not less than a predetermined value.

8. The physical quantity measuring device of any one of claims 1 to 7,
   wherein the reference point estimation means (40) calculates an angle formed between a difference vector calculated from two vector physical quantity data including vector physical quantity data that is newly obtained by the data acquisition means and a difference vector calculated, from two vector physical quantity data that is obtained before the newly obtained, vector physical quantity data by the data acquisition means, and estimates the reference point with the inclusion of a difference vector calculated from the newly obtained vector physical quantity data if the formed angle is not less than a predetermined value.

9. The physical quantity measuring device of any one of claims 1 to 8,
   wherein the reference point estimation means (40) calculates an angle formed between a difference vector and a vector connecting the middle point of the difference vector with the reference point estimated by the reference point estimation means for each of the difference vector groups used for the estimation of the coordinates of the reference point, and outputs the reference point as an offset if a maximum value of a difference between the formed angle and 90 degrees is not more than a predetermined value.

10. The physical quantity measuring device of any one of claims 1 to 9,
    wherein the reference point estimation means (40) calculates a distance between a foot of a perpendicular line drawn from the estimated reference point to the difference vector and the middle point of the difference vector for each of the difference vector groups used for the estimation of the coordinates of the reference point, and outputs the reference point as an offset if a maximum value of the calculated distance is not more than a predetermined value.

**11.** The physical quantity measuring device of any one of claims 1 to 10,
wherein the vector physical quantity detection means (20) detects a two-component vector physical quantity, and the reference point estimation means (40) calculates a distance between a perpendicular bisector of the difference vector and the estimated reference point for each of the difference vector groups used for the estimation of the coordinates of the reference point, and outputs the reference point as an offset if a maximum value of the calculated distance is not more than a predetermined value.

**12.** The physical quantity measuring device of any one of claims 1 to 11,
wherein the vector physical quantity detection means (20) detects a three-component vector physical quantity, and the reference point estimation means (40) calculates a distance between a perpendicular bisector plane of the difference vector and the estimated reference point for each of the difference vector groups used for the estimation of the coordinates of the reference point, and outputs the reference point as an offset if a maximum value of the calculated distance is not more than a predetermined value.

**13.** The physical quantity measuring device of any one of claims 1 to 12,
wherein the vector physical quantity detection means (20) is a magnetic sensor that detects magnetism as the physical quantity.

**14.** The physical quantity measuring device of any one of claims 1 to 13,
wherein the vector physical quantity detection means (20) is an acceleration sensor that detects acceleration as the physical quantity.

**15.** A physical quantity measuring method for measuring a physical quantity, comprising the steps of:

detecting a vector physical quantity composed of a plurality of components;
repeatedly obtaining the detected vector physical quantity as vector physical quantity data to obtain a vector physical quantity data group; and
calculating a difference vector group from the obtained vector physical quantity data group and estimating a reference point included in the obtained vector physical quantity data group based on a predetermined evaluation formula using the calculated difference vector group,
wherein the reference point is estimated by minimizing the evaluation formula,
wherein the evaluation formula is **characterized in that** the evaluation formula is determined by using an N-th power of an absolute value of an inner product of the difference vector and a vector connecting a middle point of the difference vector with the reference point.

**16.** The physical quantity measuring method of claim 15,
wherein the step of estimating the reference point includes the steps of:

calculating the difference vector group using a difference between each component of the obtained vector physical quantity data group; and
estimating coordinates of the reference point that is determined on a predetermined coordinate system constituted by the components of the obtained vector physical quantity data group based on the evaluation formula using the calculated difference vector group to output the coordinates of the estimated reference point as an offset.

**17.** The physical quantity measuring method of claim 15 or 16,
wherein the step of estimating the reference point further comprises the step of:

determining whether each difference vector of the calculated difference vector group is suited for estimation of the reference point, and outputting only a suitable difference vector group for estimation of the reference point based on a result of the determination.

**18.** The physical quantity measuring method of any one of claims 15 to 17,
wherein, the step of estimating the reference point further comprises the step of:

determining the degree of reliability of the estimated reference point by the difference vector group, and outputting only a suitable reference point as an offset based on a result of the determination.

19. The physical quantity measuring method of claims 15 to 18,
   wherein the N is two.

20. The physical quantity measuring method of any one of claims 15 to 19,
   wherein the step of estimating the reference point estimates the reference point by using difference vectors that a time difference of obtainment between the obtained two vector physical quantity data comprised of the difference vector is not more than a predetermined value.

21. The physical quantity measuring method of any one of claims 15 to 20,
   wherein the step of estimating the reference point calculates a magnitude of the difference vector and estimates the reference point by using the difference vectors whose magnitude are not less than a predetermined value.

22. The physical quantity measuring method of any one of claims 15 to 21,
   wherein the step of estimating the reference point calculates an angle formed between a difference vector calculated from two vector physical quantity data including vector physical quantity data that is newly obtained by the step of obtaining the data, arid a difference vector calculated from two vector physical quantity data that is obtained before the newly obtained vector physical quantity data by the step of obtaining the data, and estimates the reference point with the inclusion of a difference vector calculated from the newly obtained vector physical quantity data if the formed angle is not less than a predetermined value.

23. The physical quantity measuring method of any one of claims 15 to 22,
   wherein the step of estimating the reference point calculates an angle formed between a difference vector and a vector connecting the middle point of the difference vector with the reference point estimated by the step of estimating the reference point for each of the difference vector groups used for the estimation of the coordinates of the reference point, and outputs the reference point as an offset if a maximum value of a difference between the formed angle and 90 degrees is not more than a predetermined value.

24. The physical quantity measuring method of any one of claims 15 to 23,
   wherein the step of estimating the reference point calculates a distance between a foot of a perpendicular line drawn from the estimated reference point to the difference vector and the middle point of the difference vector for each of the difference vector groups used for the estimation of the coordinates of the reference point, and outputs the reference point as an offset if a maximum value of the calculated distance is not more than a predetermined value.

25. The physical quantity measuring method of anyone of claims 15 to 24,
   wherein the step of detecting the vector physical quantity is a step of detecting a two-component vector physical quantity, and
   the step of estimating the reference point calculates a distance between a perpendicular bisector of the difference vector and the estimated reference point for each of the difference vector groups used for the estimation of the coordinates of the reference point, and outputs the reference point as an offset if a maximum value of the calculated distance is not more than a predetermined value.

26. The physical quantity measuring method, of any one of claims 15 to 25,
   wherein the step of detecting the vector physical quantity is a step of detecting a three-component vector physical quantity, and
   the step of estimating the reference point calculates a distance between a perpendicular bisector plane of the difference vector and the estimated reference point for each of the difference vector groups used for the estimation of the coordinates of the reference point, and outputs the reference point as an offset if a maximum value of the calculated distance is not more than a predetermined value.

27. The physical quantity measuring method of any one of claims 15 to 26,
   wherein the step of detecting the vector physical quantity comprises a step of detecting magnetism as the physical quantity by using a magnetic sensor.

28. The physical quantity measuring method of any one of claims 15 to 27,
   wherein the step of detecting the vector physical quantity comprises a step of detecting acceleration as the physical quantity by using an acceleration sensor.

**Patentansprüche**

1. Messgerät für physikalische Größen zum Messen einer physikalischen Größe, das Folgendes umfasst:

   ein Detektionsmittel (20) für vektorielle physikalische Größen zum Detektieren einer vektoriellen physikalischen Größe, die aus mehreren Komponenten zusammengesetzt ist;
   ein Datenerfassungsmittel (30) zum wiederholten Gewinnen der detektierten vektoriellen physikalischen Größe als Daten der vektoriellen physikalischen Größe, um eine Datengruppe der vektoriellen physikalischen Größe zu gewinnen; und
   ein Bezugspunktabschätzungsmittel (40) zum Berechnen einer Differenzvektorgruppe aus der gewonnenen Datengruppe der vektoriellen physikalischen Größe und Abschätzen eines Bezugspunktes, der in der gewonnenen Datengruppe der vektoriellen physikalischen Größe beinhaltet ist, basierend auf einer vorgegebenen Bewertungsformel unter Verwendung der berechneten Differenzvektorgruppe,
   wobei der Bezugspunkt durch Minimieren der Bewertungsformel abgeschätzt wird,
   wobei die Bewertungsformel **dadurch gekennzeichnet ist, dass** die Bewertüngs formel durch Verwenden einer N-ten Potenz eines Absolutwertes eines inneren Produktes des Differenzvektors und eines Vektors, der einen Mittelpunkt des Differenzvektors mit dem Bezugspunkt verbindet, bestimmt wird.

2. Messgerät für physikalische Größen nach Anspruch 1,
   wobei das Bezugspunktabschätzungsmittel (40) Folgendes umfasst:

   einen Differenzvektorberechnungsabschnitt (41) zum Berechnen der Differenzvektorgruppe unter Verwendung einer Differenz zwischen jeder Komponente der gewonnenen Datengruppe der vektoriellen physikalischen Größe und
   einen Bezugspunktabschätzungsabschnitt (42) zum Abschätzen von Koordinaten des Bezugspunktes, der in einem Koordinatensystem bestimmt worden ist, das durch die Komponenten der gewonnenen Datengruppe der vektoriellen physikalischen Größe gebildet wird, basierend auf der Bewertungsformel unter Verwendung der berechneten Differenzvektorgruppe, um die Koordinaten des abgeschätzten Bezugspunktes als Versatz auszugeben.

3. Messgerät für physikalische Größen nach Anspruch 1 oder 2,
   wobei das Bezugspunktabschätzungsmittel (40) ferner Folgendes umfasst:

   einen Differenzvektorzuverlässigkeitsberechnungsabschnitt (50) zum Bestimmen, ob jeder Differenzvektor der berechneten Differenzvektorgruppe zur Abschätzung des Bezugspunktes geeignet ist, und Ausgeben nur einer geeigneten Differenzvektorgruppe zur Abschätzung des Bezugspunktes basierend auf einem Ergebnis der Bestimmung.

4. Messgerät für physikalische Größen nach irgendeinem der Ansprüche 1 bis 3,
   wobei das Bezugspunktabschätzungsmittel (40) ferner Folgendes umfasst:

   einen Zuverlässigkeitsberechnungsabschnitt (52) zum Bestimmen des Grades an Zuverlässigkeit des abgeschätzten Bezugspunktes durch die Differenzvektorgruppe und Ausgeben nur eines geeigneten Bezugspunktes als Versatz basierend auf einem Ergebnis der Bestimmung.

5. Messgerät für physikalische Größen nach Ansprüchen 1 bis 4, wobei das N zwei ist.

6. Messgerät für physikalische Größen nach irgendeinem der Ansprüche 1 bis 5,
   wobei das Bezugspunktabschätzungsmittel (40) den Bezugspunkt durch Verwenden von Differenzvektoren so abschätzt, dass eine Zeitdifferenz der Gewinnung zwischen den gewonnenen zwei Daten der vektoriellen physikalischen Größe nicht größer als ein vorgegebener Wert ist.

7. Messgerät für physikalische Größen nach irgendeinem der Ansprüche 1 bis 6,
   wobei das Bezugspunktabschätzungsmittel (40) einen Betrag des Differenzvektors berechnet und den Bezugspunkt unter Verwendung der Differenzvektoren abschätzt, deren Beträge nicht kleiner als ein vorgegebener Wert sind.

8. Messgerät für physikalische Größen nach irgendeinem der Ansprüche 1 bis 7,
wobei das Bezugspunktabschätzungsmittel (40) einen Winkel berechnet, der zwischen einem Differenzvektor, der aus zwei Daten vektorieller physikalischer Größen berechnet ist, die Daten der vektoriellen physikalischen Größe beinhalten, die durch das Datenerfassungsmittel neu gewonnen worden sind, und einem Differenzvektor gebildet ist, der aus zwei Daten vektorieller physikalischer Größen berechnet ist, die vor den neu gewonnenen Daten der vektoriellen physikalischen Größe durch das Datenerfassungsmittel gewonnen worden sind, und den Bezugspunkt mit Einschluss eines Differenzvektors abschätzt, der aus den neu gewonnenen Daten der vektoriellen physikalischen Größe berechnet ist, wenn der gebildete Winkel nicht kleiner als ein vorgegebener Wert ist.

9. Messgerät für physikalische Größen nach irgendeinem der Ansprüche 1 bis 8,
wobei das Bezugspunktabschätzungsmittel (40) einen Winkel berechnet, der zwischen einem Differenzvektor und einem Vektor gebildet ist, der den Mittelpunkt des Differenzvektors mit dem Bezugspunkt verbindet, der durch das Bezugspunktabschätzungsmittel für jeder der Differenzvektorgruppen abgeschätzt worden ist, die zur Abschätzung der Koordinaten des Bezugspunktes verwendet worden sind, und den Bezugspunkt als einen Versatz ausgibt, wenn ein Maximalwert einer Differenz zwischen dem gebildeten Winkel und 90 Grad nicht größer als ein vorgegebener Wert ist.

10. Messgerät für physikalische Größen nach irgendeinem der Ansprüche 1 bis 9,
wobei das Bezugspunktabschätzungsmittel (40) für jede der Differenzvektorgruppen, die für die Abschätzung der Koordinaten des Bezugspunktes verwendet worden sind, einen Abstand zwischen einem Fuß einer senkrechten Linie, die vom abgeschätzten Bezugspunkt zum Differenzvektor gezogen ist, und dem Mittelpunkt des Differenzvektors berechnet und den Bezugspunkt als einen Versatz ausgibt, wenn ein Maximalwert des berechneten Abstandes nicht größer als ein vorgegebener Wert ist.

11. Messgerät für physikalische Größen nach irgendeinem der Ansprüche 1 bis 10,
wobei das Detektionsmittel (20) für vektorielle physikalische Größen eine zweikomponentige vektorielle physikalische Größe detektiert und
das Bezugspunktabschätzungsmittel (40) für jede der Differenzvektorgruppen, die für die Abschätzung der Koordinaten des Bezugspunktes verwendet worden sind, einen Abstand zwischen einer Mittelsenkrechten des Differenzvektors und dem abgeschätzten Bezugspunkt berechnet und den Bezugspunkt als einen Versatz ausgibt, wenn ein Maximalwert des berechneten Abstandes nicht größer als ein vorgegebener Wert ist.

12. Messgerät für physikalische Größen nach irgendeinem der Ansprüche 1 bis 11,
wobei das Detektionsmittel (20) für vektorielle physikalische Größen eine dreikomponentige vektorielle physikalische Größe detektiert und
das Bezugspunktabschätzungsmittel (40) für jede der Differenzvektorgruppen, die für die Abschätzung der Koordinaten des Bezugspunktes verwendet worden sind, einen Abstand zwischen einer Mittelsenkrechtenebene des Differenzvektors und dem abgeschätzten Bezugspunkt berechnet und den Bezugspunkt als einen Versatz ausgibt, wenn ein Maximalwert des berechneten Abstandes nicht größer als ein vorgegebener Wert ist.

13. Messgerät für physikalische Größen nach irgendeinem der Ansprüche 1 bis 12,
wobei das Detektionsmittel (20) für vektorielle physikalische Größen ein Magnetsensor ist, der Magnetismus als die physikalische Größe detektiert.

14. Messgerät für physikalische Größen nach irgendeinem der Ansprüche 1 bis 13,
wobei das Detektionsmittel (20) für vektorielle physikalische Größen ein Beschleunigungssensor ist, der Beschleunigung als die physikalische Größe detektiert.

15. Messverfahren für physikalische Größen zum Messen einer physikalischen Größe, das die folgenden Schritte umfasst:

Detektieren einer vektoriellen physikalischen Größe, die aus mehreren Komponenten zusammengesetzt ist;
wiederholtes Gewinnen der detektierten vektoriellen physikalischen Größe als Daten der vektoriellen physikalischen Größe, um eine Datengruppe der vektoriellen physikalischen Größe zu gewinnen; und
Berechnen einer Differenzvektorgruppe aus der gewonnenen Datengruppe der vektoriellen physikalischen Größe und Abschätzen eines Bezugspunktes, der in der gewonnenen Datengruppe der vektoriellen physikalischen Größe beinhaltet ist, basierend auf einer vorgegebenen Bewertungsformel unter Verwendung der berechneten Differenzvektorgruppe,

wobei der Bezugspunkt durch Minimieren der Bewertungsformel abgeschätzt wird,
wobei die Bewertungsformel **dadurch gekennzeichnet ist, dass** die Bewertungsformel durch Verwenden einer N-ten Potenz eines Absolutwertes eines inneren Produktes des Differenzvektors und eines Vektors, der einen Mittelpunkt des Differenzvektors mit dem Bezugspunkt verbindet, bestimmt wird.

16. Messverfahren für physikalische Größen nach Anspruch 15,
wobei der Schritt des Abschätzens des Bezugspunktes die folgenden Schritte beinhaltet:

Berechnen der Differenzvektorgruppe unter Verwendung einer Differenz zwischen jeder Komponente der gewonnenen Datengruppe der vektoriellen physikalischen Größe und
Abschätzen von Koordinaten des Bezugspunktes, der in einem vorgegebenen Koordinatensystem bestimmt worden ist, das durch die Komponenten der gewonnenen Datengruppe der vektoriellen physikalischen Größe gebildet wird, basierend auf der Bewertungsformel unter Verwendung der berechneten Differenzvektorgruppe basieren, um die Koordinaten des abgeschätzten Bezugspunktes als Versatz auszugeben.

17. Messverfahren für physikalische Größen nach Anspruch 15 oder 16,
wobei der Schritt des Abschätzens des Bezugspunktes ferner die folgenden Schritte umfasst:

Bestimmen, ob jeder Differenzvektor der berechneten Differenzvektorgruppe zur Abschätzung des Bezugspunktes geeignet ist, und Ausgeben nur einer geeigneten Differenzvektorgruppe zur Abschätzung des Bezugspunktes basierend auf einem Ergebnis der Bestimmung.

18. Messverfahren für physikalische Größen nach irgendeinem der Ansprüche 15 bis 17,
wobei der Schritt des Abschätzens des Bezugspunktes ferner die folgenden Schritte umfasst:

Bestimmen des Grades an Zuverlässigkeit des abgeschätzten Bezugspunktes durch die Differenzvektorgruppe und Ausgeben nur eines geeigneten Bezugspunktes als Versatz basierend auf einem Ergebnis der Bestimmung.

19. Messverfahren für physikalische Größen nach Ansprüchen 15 bis 18,
wobei das N zwei ist.

20. Messverfahren für physikalische Größen nach irgendeinem der Ansprüche 15 bis 19,
wobei der Schritt des Abschätzens des Bezugspunktes den Bezugspunkt durch Verwenden von Differenzvektoren so abschätzt, dass eine Zeitdifferenz der Gewinnung zwischen den gewonnenen zwei Daten der vektoriellen physikalischen Größe, die aus dem Differenzvektor gebildet ist, nicht größer als ein vorgegebener Wert ist.

21. Messverfahren für physikalische Größen nach irgendeinem der Ansprüche 15 bis 20,
wobei der Schritt des Abschätzens des Bezugspunktes einen Betrag des Differenzvektors berechnet und den Bezugspunkt unter Verwendung der Differenzvektoren abschätzt, deren Beträge nicht kleiner als ein vorgegebener Wert sind.

22. Messverfahren für physikalische Größen nach irgendeinem der Ansprüche 15 bis 21,
wobei der Schritt des Abschätzens des Bezugspunktes einen Winkel berechnet, der zwischen einem Differenzvektor, der aus zwei Daten vektorieller physikalischer Größen berechnet ist, die Daten der vektoriellen physikalischen Größe beinhalten, die durch den Schritt des Gewinnens der Daten neu gewonnen worden sind, und einem Differenzvektor gebildet ist, der aus zwei Daten vektorieller physikalischer Größen berechnet ist, die vor den durch den Schritt des Gewinnens der Daten neu gewonnenen Daten vektorieller physikalischer Größen gewonnen worden sind, und den Bezugspunkt mit Einschluss eines Differenzvektors abschätzt, der aus den neu gewonnenen Daten der vektoriellen physikalischen Größe berechnet ist, wenn der gebildete Winkel nicht kleiner als ein vorgegebener Wert ist.

23. Messverfahren für physikalische Größen nach irgendeinem der Ansprüche 15 bis 22,
wobei der Schritt des Abschätzens des Bezugspunktes einen Winkel berechnet, der zwischen einem Differenzvektor und einem Vektor gebildet ist, der den Mittelpunkt des Differenzvektors mit dem Bezugspunkt verbindet, der durch den Schritt des Abschätzens des Bezugspunktes für jede der Differenzvektorgruppen abgeschätzt worden ist, die zur Abschätzung der Koordinaten des Bezugspunktes verwendet worden sind, und den Bezugspunkt als einen Versatz ausgibt, wenn ein Maximalwert einer Differenz zwischen dem gebildeten Winkel und 90 Grad nicht größer als ein vorgegebener Wert ist.

**24.** Messverfahren für physikalische Größen nach irgendeinem der Ansprüche 15 bis 23,
wobei der Schritt des Abschätzens des Bezugspunktes für jede der Differenzvektorgruppen, die für die Abschätzung der Koordinaten des Bezugspunktes verwendet worden sind, einen Abstand zwischen einem Fuß einer senkrechten Linie, die vom abgeschätzten Bezugspunkt zum Differenzvektor gezogen ist, und dem Mittelpunkt des Differenzvektors berechnet und den Bezugspunkt als einen Versatz ausgibt, wenn ein Maximalwert des berechneten Abstandes nicht größer als ein vorgegebener Wert ist.

**25.** Messverfahren für physikalische Größen nach irgendeinem der Ansprüche 15 bis 24,
wobei der Schritt des Detektierens der vektoriellen physikalischen Größe ein Schritt des Detektierens einer zweikomponentigen vektoriellen physikalischen Größe ist und
der Schritt des Abschätzens des Bezugspunktes für jede der Differenzvektorgruppen, die für die Abschätzung der Koordinaten des Bezugspunktes verwendet worden sind, einen Abstand zwischen einer Mittelsenkrechten des Differenzvektors und dem abgeschätzten Bezugspunkt berechnet und den Bezugspunkt als einen Versatz ausgibt, wenn ein Maximalwert des berechneten Abstandes nicht größer als ein vorgegebener Wert ist.

**26.** Messverfahren für physikalische Größen nach irgendeinem der Ansprüche 15 bis 25,
wobei der Schritt des Detektierens der vektoriellen physikalischen Größe ein Schritt des Detektierens einer dreikomponentigen vektoriellen physikalischen Größe ist und
der Schritt des Abschätzens des Bezugspunktes für jede der Differenzvektorgruppen, die für die Abschätzung der Koordinaten des Bezugspunktes verwendet worden sind, einen Abstand zwischen einer Mittelsenkrechteneberie des Differenzvektors und dem abgeschätzten Bezugspunkt berechnet und den Bezugspunkt als einen Versatz ausgibt, wenn ein Maximalwert des berechneten Abstandes nicht größer als ein vorgegebener Wert ist.

**27.** Messverfahren für physikalische Größen nach irgendeinem der Ansprüche 15 bis 26,
wobei der Schritt des Detektierens der vektoriellen physikalischen Größe einen Schritt des Detektierens von Magnetismus als der physikalischen Größe unter Verwendung eines Magnetsensors umfasst.

**28.** Messverfahren für physikalische Größen nach irgendeinem der Ansprüche 15 bis 27,
wobei der Schritt des Detektierens der vektoriellen physikalischen Größe einen Schritt des Detektierens von Beschleunigung als der physikalischen Größe unter Verwendung eines Beschleunigungssensors umfasst.

**Revendications**

**1.** Un appareil de mesure de quantité physique pour mesurer une quantité physique, comprenant :

un moyen de détection de quantité physique vectorielle (20) pour détecter une quantité physique vectorielle composée d'une pluralité de composantes ;
un moyen d'acquisition de données (30) pour obtenir de façon répétée la quantité physique vectorielle détectée en tant que données de quantité physique vectorielle pour obtenir un groupe de données de quantité physique vectorielle ; et
un moyen d'évaluation de point de référence (40) pour calculer un groupe de vecteurs de différence à partir du groupe de données de quantité physique vectorielle obtenu et pour évaluer un point de référence inclus dans le groupe de données de quantité physique vectorielle obtenu en se basant sur une formule d'évaluation prédéterminée en utilisant le groupe de vecteurs de différence calculé ;
dans lequel la formule d'évaluation est **caractérisée en ce que** la formule d'évaluation est déterminée en utilisant une puissance de rang N d'une valeur absolue d'un produit intérieur du vecteur de différence et d'un vecteur reliant un point médian du vecteur de différence au point de référence.

**2.** L'appareil de mesure de quantité physique selon la revendication 1,
dans lequel le moyen d'évaluation de point de référence comprend :

une partie de calcul de vecteur de différence (41) pour calculer le groupe de vecteurs de différence en utilisant une différence entre chaque composante du groupe de données de quantité physique vectorielle obtenu ; et
une partie d'évaluation de point de référence (42) pour évaluer des coordonnées du point de référence qui est déterminé sur un système de coordonnées constitué par les composantes du groupe de données de quantité physique vectorielle obtenu en se basant sur la formule d'évaluation en utilisant le groupe de vecteurs de différence calculé pour sortir les coordonnées du point de référence évalué en tant que décalage.

**3.** L'appareil de mesure de quantité physique selon la revendication 1 ou 2,
dans lequel le moyen d'évaluation de point de référence (40) comprend en outre :

une partie de calcul de fiabilité de vecteur de différence (50) pour déterminer si chaque vecteur de différence du groupe de vecteurs de différence calculé est approprié pour une évaluation du point de référence, et pour sortir seulement un groupe de vecteurs de différence approprié pour l'évaluation du point de référence en se basant sur un résultat de la détermination.

**4.** L'appareil de mesure de quantité physique selon une quelconque des revendications 1 à 3
dans lequel le moyen d'évaluation de point de référence comprend en outre :

une partie de calcul de fiabilité (52) pour déterminer le degré de fiabilité du point de référence évalué par le groupe de vecteurs de différence, et pour sortir seulement un point de référence approprié en tant que décalage en se basant sur un résultat de la détermination.

**5.** L'appareil de mesure de quantité physique selon les revendications 1 à 4, dans lequel N vaut deux.

**6.** L'appareil de mesure de quantité physique selon une quelconque des revendications 1 à 5,
dans lequel le moyen d'évaluation de point de référence (40) évalue le point de référence en utilisant des vecteurs de différence en ce qu'une différence de temps d'acquisition entre les deux données de quantité physique vectorielle obtenues n'est pas supérieure à une valeur prédéterminée.

**7.** L'appareil de mesure de quantité physique selon une quelconque des revendications 1 à 6,
dans lequel le moyen d'évaluation de point de référence (40) calcule une amplitude du vecteur de différence et évalue le point de référence en utilisant les vecteurs de différence dont l'amplitude n'est pas inférieure à une valeur prédéterminée.

**8.** L'appareil de mesure de quantité physique selon une quelconque des revendications 1 à 7,
dans lequel le moyen d'évaluation de point de référence (40) calcule un angle formé entre un vecteur de différence calculé à partir de deux données de quantité physique vectorielle incluant des données de quantité physique vectorielle qui sont nouvellement obtenues par le moyen d'acquisition de données et un vecteur de différence calculé à partir de deux données de quantité physique vectorielle qui sont obtenues avant les données de quantité physique vectorielle nouvellement obtenues par le moyen d'acquisition de données, et évalue le point de référence avec l'inclusion d'un vecteur de différence calculé à partir des données de quantité physique vectorielle nouvellement obtenues si l'angle formé n'est pas inférieur à une valeur prédéterminée.

**9.** L'appareil de mesure de quantité physique selon une quelconque des revendications 1 à 8,
dans lequel le moyen d'évaluation de point de référence (40) calcule un angle formé entre un vecteur de différence et un vecteur reliant le point médian du vecteur de différence au point de référence évalué par le moyen d'évaluation de point de référence pour chacun des groupes de vecteurs de différence utilisés pour l'évaluation des coordonnées du point de référence, et sort le point de référence en tant que décalage si une valeur maximale d'une différence entre l'angle formé et 90 degrés n'est pas supérieure à une valeur prédéterminée.

**10.** L'appareil de mesure de quantité physique selon une quelconque des revendications 1 à 9,
dans lequel le moyen d'évaluation de point de référence (40) calcule une distance entre un pied d'une ligne perpendiculaire tracée du point de référence évalué au vecteur de différence et le point médian du vecteur de différence pour chacun des groupes de vecteurs de différence utilisé pour l'évaluation des coordonnées du point de référence, et sort le point de référence en tant que décalage si une valeur maximale de la distance calculée n'est pas supérieure à une valeur prédéterminée.

**11.** L'appareil de mesure de quantité physique selon une quelconque des revendications 1 à 10,
dans lequel le moyen de détection de quantité physique vectoriel (20) détecte une quantité physique vectorielle à deux composantes, et
le moyen d'évaluation de point de référence (40) calcule une distance entre une bissectrice perpendiculaire du vecteur de différence et le point de référence évalué pour chacun des groupes de vecteurs de différence utilisé pour l'évaluation des coordonnées du point de référence, et sort le point de référence en tant que décalage si une valeur maximale de la distance calculée n'est pas supérieure à une valeur prédéterminée.

**12.** L'appareil de mesure de quantité physique selon une quelconque des revendications 1 à 11, dans lequel le moyen de détection de quantité physique vectorielle (20) détecte un moyen de détection de quantité physique vectorielle à trois composantes, et le moyen d'évaluation de point de référence (40) calcule une distance entre un plan de bissectrice perpendiculaire du vecteur de différence et le point de référence évalué pour chacun des groupes de vecteurs de différence utilisé pour l'évaluation des coordonnées du point de référence, et sort le point de référence en tant que décalage si une valeur maximale de la distance calculée n'est pas supérieure à une valeur prédéterminée.

**13.** L'appareil de mesure de quantité physique selon une quelconque des revendications 1 à 12, dans lequel le moyen de détection de quantité physique vectorielle (20) est un capteur magnétique qui détecte le magnétisme en tant que quantité physique.

**14.** L'appareil de mesure de quantité physique selon une quelconque des revendications 1 à 13, dans lequel le moyen de détection de quantité physique vectorielle (20) est un capteur d'accélération qui détecte une accélération en tant que quantité physique.

**15.** Un procédé de mesure de quantité physique pour mesurer une quantité physique, comprenant les étapes de :

détection d'une quantité physique vectorielle composée d'une pluralité de composantes ;
obtention de façon répétée de la quantité physique vectorielle détectée en tant que données de quantité physique vectorielle pour obtenir un groupe de données de quantité physique vectorielle ; et
calcul d'un groupe de vecteurs de différence à partir du groupe de données de quantité physique vectorielle obtenu et évaluation d'un point de référence inclus dans le groupe de données de quantité physique vectorielle obtenu en se basant sur une formule d'évaluation prédéterminée en utilisant le groupe de vecteurs de différence calculé ;
dans lequel le point de référence est évalué en minimisant la formule d'évaluation,
dans lequel la formule d'évaluation est **caractérisée en ce que** la formule d'évaluation est déterminée en utilisant une puissance de rang N d'une valeur absolue d'un produit intérieur du vecteur de différence et d'un vecteur reliant un point médian du vecteur de différence au point de référence.

**16.** Le procédé de mesure de quantité physique selon la revendication 15, dans lequel l'étape d'évaluation du point de référence inclut les étapes de :

calcul du groupe de vecteurs de différence en utilisant une différence entre chaque composante du groupe de données de quantité physique vectorielle obtenu ; et
évaluation des coordonnées du point de référence qui est déterminé sur un système de coordonnées prédéterminé constitué par les composantes du groupe de données de quantité physique vectorielle obtenu qui sont des valeurs de coordonnée en se basant sur la formule d'évaluation en utilisant le groupe de vecteurs de différence calculé pour sortir les coordonnées du point de référence évalué en tant que décalage.

**17.** Le procédé de mesure de quantité physique selon la revendication 15 ou 16, dans lequel l'étape d'évaluation du point de référence comprend en outre l'étape de :

détermination si chaque vecteur de différence du groupe de vecteurs de différence calculé est approprié pour l'évaluation du point de référence, et sortie seulement d'un groupe de vecteurs de différence approprié pour l'évaluation du point de référence en se basant sur un résultat de la détermination.

**18.** Le procédé de mesure de quantité physique selon une quelconque des revendications 15 à 17, dans lequel l'étape d'évaluation du point de référence comprend en outre l'étape de :

détermination du degré de fiabilité du point de référence évalué par le groupe de vecteurs de différence, et sortie seulement d'un point de référence approprié en tant que décalage en se basant sur un résultat de la détermination.

**19.** Le procédé de mesure de quantité physique selon les revendications 15 à 18, dans lequel N vaut deux.

**20.** Le procédé de mesure de quantité physique selon une quelconque des revendications 15 à 19,

dans lequel l'étape d'évaluation du point de référence évalue le point de référence en utilisant des vecteurs de différence en ce qu'une différence de temps d'acquisition entre les deux données de quantité physique vectorielle obtenues composées du vecteur de différence n'est pas supérieure à une valeur prédéterminée.

21. Le procédé de mesure de quantité physique selon une quelconque des revendications 15 à 20, dans lequel l'étape d'évaluation du point de référence calcule une amplitude du vecteur de différence et évalue le point de référence en utilisant les vecteurs de différence dont l'amplitude n'est pas inférieure à une valeur prédéterminée.

22. Le procédé de mesure de quantité physique selon une quelconque des revendications 15 à 21, dans lequel l'étape d'évaluation du point de référence calcule un angle formé entre un vecteur de différence calculé à partir de deux données de quantité physique vectorielle incluant des données de quantité physique vectorielle qui sont nouvellement obtenues par l'étape d'obtention des données et un vecteur de différence calculé à partir de deux données de quantité physique vectorielle qui sont obtenues avant les données de quantité physique vectorielle nouvellement obtenues par l'étape d'obtention des données, et évalue le point de référence avec l'inclusion d'un vecteur de différence calculé à partir des données de quantité physique vectorielle nouvellement obtenues si l'angle formé n'est pas inférieur à une valeur prédéterminée.

23. Le procédé de mesure de quantité physique selon une quelconque des revendications 15 à 22, dans lequel l'étape d'évaluation du point de référence calcule un angle formé entre un vecteur de différence et un vecteur reliant le point médian du vecteur de différence au point de référence évalué par l'étape d'évaluation de point de référence pour chacun des groupes de vecteurs de différence utilisé pour l'évaluation des coordonnées du point de référence, et sort le point de référence en tant que décalage si une valeur maximale d'une différence entre l'angle formé et 90 degrés n'est pas supérieure à une valeur prédéterminée.

24. Le procédé de mesure de quantité physique selon une quelconque des revendications 15 à 23, dans lequel l'étape d'évaluation du point de référence calcule une distance entre un pied d'une ligne perpendiculaire tracée du point de référence évalué au vecteur de différence et du point médian du vecteur de différence pour chacun des groupes de vecteurs de différence utilisé pour l'évaluation des coordonnées du point de référence, et sort le point de référence en tant que décalage si une valeur maximale de la distance calculée n'est pas supérieure à une valeur prédéterminée.

25. Le procédé de mesure de quantité physique selon une quelconque des revendications 15 à 24, dans lequel l'étape de détection de la quantité physique vectorielle est une étape de détection d'une quantité physique vectorielle à deux composantes, et l'étape d'évaluation du point de référence calcule une distance entre une bissectrice perpendiculaire du vecteur de différence et le point de référence évalué pour chacun des groupes de vecteurs de différence utilisé pour l'évaluation des coordonnées du point de référence, et sort le point de référence en tant que décalage si une valeur maximale de la distance calculée n'est pas supérieure à une valeur prédéterminée.

26. Le procédé de mesure de quantité physique selon une quelconque des revendications 15 à 25, dans lequel l'étape de détection de la quantité physique vectorielle est une étape de détection d'une quantité physique vectorielle à trois composantes, et l'étape d'évaluation du point de référence calcule une distance entre un plan de bissectrice perpendiculaire du vecteur de différence et le point de référence évalué pour chacun des groupes de vecteurs de différence utilisé pour l'évaluation des coordonnées du point de référence, et sort le point de référence en tant que décalage si une valeur maximale de la distance calculée n'est pas supérieure à une valeur prédéterminée.

27. Le procédé de mesure de quantité physique selon une quelconque des revendications 15 à 26, dans lequel l'étape de détection de la quantité physique vectorielle comprend une étape de détection du magnétisme en tant que quantité physique en utilisant un capteur magnétique.

28. Le procédé de mesure de quantité physique selon une quelconque des revendications 15 à 27, dans lequel l'étape de détection de la quantité physique vectorielle comprend une étape de détection d'accélération en tant que quantité physique en utilisant un capteur d'accélération.

EP 2 543 961 B1

100

PHYSICAL QUANTITY MEASURING SYSTEM

PHYSICAL QUANTITY MEASURING DEVICE

20

VECTOR PHYSICAL
QUANTITY DETECTION
MEANS(VECTOR
PHYSICAL QUANTITY)

30

DATA ACQUISITION
MEANS (VECTOR
PHYSICAL QUANTITY
DATA GROUP)

40

REFERENCE POINT
ESTIMATION MEANS
(DIFFERENCE VECTOR GROUP,
EVALUATION FORMULA)

→ OFFSET

10

OFFSET

MEASUREMENT
DATA

CALCULATING
PORTION

200

VARIOUS
COMPUTATION
AMOUNTS

FIG.1

EP 2 543 961 B1

40

## REFERENCE POINT ESTIMATION MEANS

43

EVALUATION FORMULA
(USING DIFFERENCE
VECTOR)

41

MEASUREMENT
DATA

DIFFERENCE VECTOR
CALCULATING PORTION
( · DIFFERENCE VECTOR GROUP V1 )
( · DATA GROUP D1 COMPRISED OF )
  DIFFERENCE VECTORS

V1, D1

42

REFERENCE POINT
ESTIMATION PORTION
( · DIFFERENCE VECTOR GROUP )
( · DATA GROUP COMPRISED OF )
  DIFFERENCE VECTORS

OFFSET

# FIG.2

```
        ┌──────────────────────────────────┐
        │             START                │
        │  (PHYSICAL QUANTITY MEASUREMENT)  │
        └──────────────────────────────────┘
                        │
                        ▼
        ┌──────────────────────────────────┐   S1
        │   DETECT VECTOR PHYSICAL QUANTITY │
        │   COMPOSED OF PLURAL COMPONENTS   │
        └──────────────────────────────────┘
                        │
                        ▼
        ┌──────────────────────────────────┐   S2
        │   REPEATEDLY DETECT VECTOR        │
        │   PHYSICAL QUANTITY, AND OBTAIN   │
        │   VECTOR PHYSICAL QUANTITY DATA   │
        │   GROUP                           │
        └──────────────────────────────────┘
                        │
                        ▼
        ┌──────────────────────────────────┐   S3
        │   CALCULATE DIFFERENCE VECTOR     │
        │   GROUP FROM DIFFERENCE OF EACH   │
        │   COMPONENT OF OBTAINED VECTOR    │
        │   PHYSICAL QUANTITY DATA GROUP    │
        └──────────────────────────────────┘
                        │
                        ▼
        ┌──────────────────────────────────┐   S10
        │ DETERMINE WHETHER EACH DIFFERENCE │
        │ VECTOR OF CALCULATED DIFFERENCE   │
        │ VECTOR GROUP ARE SUITED FOR       │
        │ REFERENCE POINT ESTIMATION,       │
        │ AND OUTPUT ONLY THE SUITABLE FOR  │
        │ ESTIMATION OF REFERENCE POINT     │
        │ BASED ON DETERMINATION RESULT     │
        └──────────────────────────────────┘
                        │
                        ▼
        ┌──────────────────────────────────┐   S4
        │ ESTIMATE COORDINATE OF REFERENCE  │
        │ POINT DETERMINED ON A COORDINATE  │
        │ SYSTEM WHERE EACH COMPONENT OF    │
        │ VECTOR PHYSICAL QUANTITY DATA     │
        │ GROUP CONSTITUTE CORDINATE VALUE  │
        └──────────────────────────────────┘
                        │
                        ▼
        ┌──────────────────────────────────┐   S20
        │   JUDGE DEGREE OF RELIABILITY OF  │
        │   THE ESTIMATED REFERENCE POINT   │
        │   BY THE DIFFERENCE VECTOR GROUP, │
        │   AND OUTPUT REFERENCE POINT AS   │
        │   OFFSET BASED ON JUDGED RESULT   │
        └──────────────────────────────────┘
                        │
                        ▼
                ┌──────────────┐
                │     END      │
                └──────────────┘
```

# FIG.3

( METHOD OF ESTIMATING OFFSET FROM DATA GROUP OBTAINED )
( UNDER ENVIRONMENT WHERE GEOMAGNETISM SIZE IS NOT UNIFORM )

| GEOMAGNETIC AZIMUTH | GEOMAGNETIC AZIMUTH | GEOMAGNETIC AZIMUTH |
|---|---|---|
| ----- CIRCLE 1 | —·— CIRCLE 2 | —··— CIRCLE 3 |
| ✕ OFFSET | ■ MEASUREMENT DATA | ◄— TRANSITION OF GEOMAGNETISM |

FIG.4

EP 2 543 961 B1

40

REFERENCE POINT ESTIMATION MEANS

43

```
┌ ─ ─ ─ ─ ─ ─ ┐
  EVALUATION
   FORMULA
└ ─ ─ ─ ─ ─ ─ ┘
```

41

```
┌──────────────┐
│  DIFFERENCE  │
│    VECTOR    │
│ ARITHEMETIC  │
│   PORTION    │
└──────────────┘
```

50

```
┌──────────────────────────────────┐
│ DIFFERENCE VECTOR RELIABILITY     │
│ CALCULATING PORTION               │
│ ⎛ ·DIFFERENCE VECTOR GROUP V2  ⎞   │
│ ⎜ ·DATA GROUP D2 COMPRISED OF  ⎟   │
│ ⎝  DIFFERENCE VECTORS         ⎠   │
└──────────────────────────────────┘
```

42

```
┌──────────────┐
│  REFERENCE   │
│    POINT     │
│  ESTIMATION  │
│   PORTION    │
└──────────────┘
```

MEASUREMENT DATA → $V1, D1$ → $V2, D2$ → OFFSET

# FIG.5

$\left(\begin{array}{c}\text{RELATIONSHIP BETWEEN DIFFERENCE VECTOR USED FOR ESTIMATION OF} \\ \text{REFERENCE POINT, AND NOISE INCLUDED IN ESTIMATION DATA AND OFFSET}\end{array}\right)$

**FIG.6A** WHEN MAGNITUDE OF DIFFERENCE VECTOR IS LARGE

——— GEOMAGNETIC AZIMUTH CIRCLE 1

✕ OFFSET ■ MEASUREMENT DATA

$\left(\begin{array}{c}\text{RELATIONSHIP BETWEEN DIFFERENCE VECTOR USED FOR ESTIMATION OF} \\ \text{REFERENCE POINT, AND NOISE INCLUDED IN ESTIMATION DATA AND OFFSET}\end{array}\right)$

**FIG.6B** WHEN MAGNITUDE OF DIFFERENCE VECTOR IS SMALL

——— GEOMAGNETIC AZIMUTH CIRCLE 1

✕ OFFSET ■ MEASUREMENT DATA

( RELATIONSHIP BETWEEN DIFFERENCE VECTOR USED FOR ESTIMATION
OF REFERENCE POINT, AND TIME DIFFERENCE IN ACQUISITION OF
MEASUREMENT DATA COMPRISED OF DIFFERENCE VECTOR AND OFFSET )

FIG.7A

WHEN TIME DIFFERENCE IS SMALL

GEOMAGNETIC GEOMAGNETIC
----- AZIMUTH CIRCLE 1 ——— AZIMUTH CIRCLE 2
✕ OFFSET ■ MEASUREMENT ◄—— TRANSITION OF
DATA GEOMAGNETISM

( RELATIONSHIP BETWEEN DIFFERENCE VECTOR USED FOR ESTIMATION
OF REFERENCE POINT, AND TIME DIFFERENCE IN ACQUISITION OF
MEASUREMENT DATA COMPRISED OF DIFFERENCE VECTOR AND OFFSET )

FIG.7B

WHEN TIME DIFFERENCE IS LARGE

GEOMAGNETIC GEOMAGNETIC
----- AZIMUTH CIRCLE 1 ——— AZIMUTH CIRCLE 2
✕ OFFSET ■ MEASUREMENT ◄—— TRANSITION OF
DATA GEOMAGNETISM

$\left(\begin{array}{c}\text{WHEN NOISE IS INCLUDED IN MEASUREMENT DATA, RELATIONSHIP}\\\text{BETWEEN ANGLE FORMED AMONG DIFFERENCE VECTORS USED FOR}\\\text{ESTIMATION OF REFERENCE POINT AND OFFSET}\end{array}\right)$

FIG.8A

WHEN ANGLE FORMED AMONG DIFFERENCE VECTORS IS SMALL

----- GEOMAGNETIC      ----- GEOMAGNETIC
        AZIMUTH CIRCLE 1   AZIMUTH CIRCLE 2
        ✕ OFFSET           ■ MEASUREMENT DATA

$\left(\begin{array}{c}\text{WHEN NOISE IS INCLUDED IN MEASUREMENT DATA, RELATIONSHIP}\\\text{BETWEEN ANGLE FORMED AMONG DIFFERENCE VECTORS USED FOR}\\\text{ESTIMATION OF REFERENCE POINT AND OFFSET}\end{array}\right)$

FIG.8B

WHEN ANGLE FORMED AMONG DIFFERENCE VECTORS IS LARGE

----- GEOMAGNETIC      ----- GEOMAGNETIC
        AZIMUTH CIRCLE 1   AZIMUTH CIRCLE 2
        ✕ OFFSET           ■ MEASUREMENT DATA

FIG.9

$$\left(\begin{array}{c}\text{RELATIONSHIP BETWEEN TRUE OFFSET, ESTIMATED REFERENCE}\\\text{POINT AND VECTOR DRAWN FROM ESTIMATED REFERENCE POINT TO}\\\text{MIDDLE POINT OF DIFFERENCE VECTOR USED FOR ESTIMATION}\end{array}\right)$$

**FIG.10A**

WHEN REFERENCE POINT IS ESTIMATED USING DIFFERENCE
VECTOR COMPRISED OF MEASUREMENT DATA WITH NO NOISE

—— GEOMAGNETIC AZIMUTH CIRCLE 1

✕ TRUE OFFSET  ■ MEASUREMENT  ＋ ESTIMATED
DATA REFERENCE POINT

$$\left(\begin{array}{c}\text{RELATIONSHIP BETWEEN TRUE OFFSET, ESTIMATED REFERENCE}\\\text{POINT AND VECTOR DRAWN FROM ESTIMATED REFERENCE POINT TO}\\\text{MIDDLE POINT OF DIFFERENCE VECTOR USED FOR ESTIMATION}\end{array}\right)$$

**FIG.10B**

WHEN REFERENCE POINT IS ESTIMATED USING DIFFERENCE
VECTOR COMPRISED OF MEASUREMENT DATA INCLUDING NOISE

—— GEOMAGNETIC AZIMUTH CIRCLE 1

✕ TRUE OFFSET  ■ MEASUREMENT  ＋ ESTIMATED
DATA REFERENCE POINT

(CONCEPT OF METHOD FOR ESTIMATING OFFSET IN
CONVENTIONAL AZIMUTH MEASURING DEVICE)

FIG.11

(RESULT OF MEASURING MAGNITUDE OF GEOMAGNETISM, DIP OF
GEOMAGNETISM AND WALKING AZIMUTH (GEOMAGNETIC AZIMUTH) WHILE
WALKING STRAIGHT IN URBAN AREA) MEASUREMENT DATA WHEN WALKING
ON KOKUSAI STREET (AZIMUTH ANGLE ABOUT 255 DEGREES)

TIME (SECOND)

―― GEOMAGNETIC SIZE

―― AZIMUTH ANGLE

―― DIP

**FIG.12**

EP 2 543 961 B1

300

REFERENCE POINT
ESTIMATION MEANS

303

┌─────────────────┐
│   EVALUATION    │
│     FORMULA     │
└─────────────────┘

301                                              302

┌──────────────┐   MEASUREMENT    ┌──────────────────┐
│     DATA     │      DATA        │ REFERENCE POINT  │   OFFSET
│ ACQUISITION  │ ───────────────▶ │    ESTIMATION    │ ─────────▶
│    MEANS     │                  │     PORTION      │
└──────────────┘                  └──────────────────┘

# FIG.13

------- GEOMAGNETIC AZIMUTH CIRCLE 1
✕ TRUE OFFSET
＋ ESTIMATED OFFSET (FORMULA 7)
⊞ ESTIMATED OFFSET (CONVENTIONAL ART)
—■— MEASUREMENT DATA
—□— MEASUREMENT DATA
—◆— MEASUREMENT DATA

# FIG.14

------- GEOMAGNETIC AZIMUTH CIRCLE
+   ESTIMATED OFFSET (FORMULA 7)

# FIG.15

------- GEOMAGNETIC AZIMUTH CIRCLE
+ ESTIMATED OFFSET

# FIG.16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003008293 W
- JP 2004009324 W
- JP 2004018888 W
- JP 2005195376 A
- JP 2005014817 W
- JP 2006326015 W
- JP 2003101033 A
- JP 2006226810 A
- US 2006190174 A1